# EUROPEAN PATENT APPLICATION

(11) **EP 4 568 379 A1**
(43) Date of publication of application: **11.06.2025**
(21) Application number: 23834653.0
(22) Date of filing: 26.06.2023
(51) Int. Cl.: H04W 72/04, H04W 72/12

(54) **METHOD AND APPARATUS USED IN NODE FOR WIRELESS COMMUNICATION**

(30) Priority: 06.07.2022 CN 202210799139
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/102490
(87) International publication number: WO 2024/007879

(57) **Abstract**

The present application discloses a method and apparatus used in a node for wireless communication. A first receiver receives first signaling, which is used to determine a first time-frequency resource set associated with a first SPS configuration, the first time-frequency resource set belongs to frequency domain resources in a first frequency band configuration in the frequency domain. The first receiver receives second signaling, which is used to determine a target frequency band configuration, the target frequency band configuration is a frequency band configuration after a change. The first time-frequency resource set is later in the time domain than the second signaling, with a first delay equal to the time domain delay between the second signaling and the first time-frequency resource set. Whether a PDSCH for the first SPS configuration is received in the first time-frequency resource set is related to at least one of the relationships between the target frequency band configuration and the first frequency band configuration, or the first delay.

## Description

### Technical field

This application relates to a transmission method and apparatus in a wireless communication system, particularly a method and apparatus for transmitting wireless signals in a wireless communication system supporting cellular networks.

### Background art

Network energy saving is crucial for environmental sustainability, reducing environmental impact, and saving operational costs. With the denser deployment of 5G networks, the use of more antennas, larger bandwidths, utilization of additional frequency bands, and continuously increasing data transmission rates, enhancing network energy saving has become an important aspect of 5G development. Dynamically adjusting the frequency domain resources used is an effective approach to achieving network energy saving.

### Summary of invention

Semi-persistent scheduling (SPS) is an important scheduling method in 5G NR; how to enhance SPS to adapt to network energy-saving scenarios with more frequent frequency domain resource adjustments is a key issue that needs to be addressed. It should be noted that the above description uses network energy-saving scenarios as an example; this application is equally applicable to other scenarios, such as non-network energy-saving scenarios, eMBB (Enhance Mobile Broadband), URLLC (Ultra Reliable and Low Latency Communication), MBS (Multicast and Broadcast Services), IoT (Internet of Things), V2X (Vehicle-to-Everything), NTN (Non-Terrestrial Networks), shared spectrum, and similar technical effects can be achieved. Furthermore, adopting a unified solution across different scenarios (including but not limited to network energy-saving scenarios, non-network energy-saving scenarios, eMBB, URLLC, MBS, IoT, V2X, NTN, and shared spectrum) helps reduce hardware complexity and costs or improve performance. In the absence of conflicts, the embodiments and features within the embodiments of any node in this application can be applied to any other node. In the absence of conflicts, the embodiments and features within the embodiments of this application can be arbitrarily combined with each other.

As an embodiment, the interpretation of the terminology in this application refers to the definitions in the 3GPP specification protocol TS36 series.

As an embodiment, the interpretation of the terminology in this application refers to the definitions in the 3GPP specification protocol TS38 series.

As an embodiment, the interpretation of the terminology in this application refers to the definitions in the 3GPP specification protocol TS37 series.

As an embodiment, the interpretation of the terminology in this application refers to the definitions in the specification protocols of the IEEE (Institute of Electrical and Electronics Engineers).

The present application discloses a method for a first node used for wireless communication, characterized in that it comprises:
receiving first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
receiving second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether a PDSCH for the first SPS configuration is received in the first time-frequency resource set is related to at least one of: the relationship between the target frequency band configuration and the first frequency band configuration, or the first delay.

As an embodiment, the problem to be solved by this application includes how to handle the impact of changes in frequency band configuration on SPS PDSCH reception.

As an embodiment, the problem to be solved by this application includes how to determine whether to receive the PDSCH for the first SPS configuration in the first time-frequency resource set based on the target frequency band configuration.

As an embodiment, the problem to be solved by this application includes how to enhance SPS to cope with more frequent frequency domain resource changes (including BWP switching or changes in available RBs, etc.).

As an embodiment, the problem to be solved by this application includes how to improve the usage efficiency of SPS.

As an embodiment, the problem to be solved by this application includes how to reduce signaling overhead related to SPS.

As an embodiment, the problem to be solved by this application includes how to determine the impact of changes in frequency band configuration on SPS PDSCH reception in MBS scenarios.

As an embodiment, the problem to be solved by this application includes how to determine the impact of changes in frequency band configuration on SPS PDSCH reception in scenarios supporting XR (Extended Reality) services.

As an embodiment, the problem to be solved by this application includes how to determine the impact of changes in frequency band configuration on SPS PDSCH reception in V2X/vehicle networking scenarios.

As an embodiment, the problem to be solved by this application includes how to improve the flexibility of base station scheduling or configuration.

As an embodiment, the problem to be solved by this application includes how to enhance the mutual understanding and consistency between communication parties regarding SPS PDSCH transmission.

As an embodiment, the benefits of the above method include improved SPS transmission performance.

As an embodiment, the benefits of the above method include facilitating network energy saving.

As an embodiment, the benefits of the above method include improved resource utilization.

As an embodiment, the benefits of the above method include reduced signaling overhead.

As an embodiment, the benefits of the above method include good compatibility.

As an embodiment, the benefits of the above method include minimal changes to existing 3GPP standards.

According to an aspect of the present application, the method is characterized in that,
when the first condition set is satisfied, the PDSCH for the first SPS configuration is received in the first time-frequency resource set; the first condition set includes a first condition, and the first condition is related to the relationship between the target frequency band configuration and the first frequency band configuration.

According to an aspect of the present application, the method is characterized in that,
the first condition is: the first time-frequency resource set belongs to the intersection of frequency domain resources in the target frequency band configuration and frequency domain resources in the first frequency band configuration in the frequency domain.

According to an aspect of the present application, the method is characterized in that,
the first condition set includes a second condition, the second condition being related to the relationship between the first delay and a first reference delay, wherein the first reference delay is not less than the delay required to complete the change to the target frequency band configuration or is associated with the second signaling.

According to an aspect of the present application, the method is characterized in that,
the first frequency band configuration is a BWP, and the target frequency band configuration is the first frequency band configuration or a BWP other than the first frequency band configuration.

According to an aspect of the present application, the method is characterized in that,
the first frequency band configuration set includes multiple frequency band configurations, all of the multiple frequency band configurations in the first frequency band configuration set are associated with the same BWP, and the first frequency band configuration belongs to the multiple frequency band configurations in the first frequency band configuration set; the target frequency band configuration is one of the multiple frequency band configurations in the first frequency band configuration set.

According to an aspect of the present application, the method is characterized in that it comprises:
receiving a first information block, or, transmitting a first information block;
wherein, the first information block is used to determine whether receiving the PDSCH for the first SPS configuration in the first time-frequency resource set is related to at least one of: the relationship between the target frequency band configuration and the first frequency band configuration, or the first delay.

The present application discloses a method for a second node used for wireless communication, characterized in that it comprises:
transmitting first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
transmitting second signaling, wherein the second signaling is later than the first signaling;
wherein, second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether the receiving end of the first signaling receives the PDSCH for the first SPS configuration in the first time-frequency resource set is related to at least one of: the relationship between the target frequency band configuration and the first frequency band configuration, or the first delay.

According to an aspect of the present application, the method is characterized in that,
when the first condition set is satisfied, the receiving end of the first signaling receives the PDSCH for the first SPS configuration in the first time-frequency resource set; the first condition set includes a first condition, which is related to the relationship between the target frequency band configuration and the first frequency band configuration.

According to an aspect of the present application, the method is characterized in that,
the first condition is: the target frequency band configuration is the same as the first frequency band configuration; or, the first condition is: the first time-frequency resource set in the frequency domain belongs to the intersection of the frequency domain resources in the target frequency band configuration and the frequency domain resources in the first frequency band configuration.

According to an aspect of the present application, the method is characterized in that,
the first condition set includes a second condition, which is related to the relationship between the first delay and a first reference delay, where the first reference delay is not less than the delay required to complete the change to the target frequency band configuration or is associated with the second signaling.

According to an aspect of the present application, the method is characterized in that,
the first frequency band configuration is a BWP, and the target frequency band configuration is either the first frequency band configuration or a BWP other than the first frequency band configuration.

According to an aspect of the present application, the method is characterized in that,
the first frequency band configuration set includes multiple frequency band configurations, all of which are associated with the same BWP, and the first frequency band configuration is one of the multiple frequency band configurations in the first frequency band configuration set; the target frequency band configuration is one of the multiple frequency band configurations in the first frequency band configuration set.

According to an aspect of the present application, the method is characterized in that it comprises:
transmitting a first information block, or, receiving a first information block;
wherein, the first information block is used to determine whether receiving the PDSCH for the first SPS configuration in the first time-frequency resource set is related to at least one of: the relationship between the target frequency band configuration and the first frequency band configuration, or the first delay.

The present application discloses a first node used for wireless communication, characterized in that it comprises:
a first receiver that receives first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
the first receiver receives second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether a PDSCH for the first SPS configuration is received in the first time-frequency resource set is related to at least one of: the relationship between the target frequency band configuration and the first frequency band configuration, or the first delay.

The present application discloses a second node used for wireless communication, characterized in that it comprises:
a second transmitter that transmits first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
the second transmitter transmits second signaling, wherein the second signaling is later than the first signaling;
wherein, second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether the receiving end of the first signaling receives the PDSCH for the first SPS configuration in the first time-frequency resource set is related to at least one of: the relationship between the target frequency band configuration and the first frequency band configuration, or the first delay.

The present application discloses a method for a first node used for wireless communication, characterized in that it comprises:
receiving first signaling, wherein the first signaling is used to determine a first time-frequency resource set, the first time-frequency resource set is associated with a first CG configuration, and the first time-frequency resource set belongs to frequency domain resources in a first frequency band configuration in the frequency domain;
receiving second signaling, wherein the second signaling is later than the first signaling;
wherein, the second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether there is an uplink grant for the first CG configuration in the first time-frequency resource set is related to at least one of the relationship between the target frequency band configuration and the first frequency band configuration, or the first delay.

As an embodiment, the problem to be solved by this application includes: how to handle the impact of changes in frequency band configuration on uplink grants for Type 2 CG (Configured Grant).

As an embodiment, the problem to be solved by this application includes: how to determine whether there is an uplink grant for the first CG configuration in the first time-frequency resource set based on the target frequency band configuration.

As an embodiment, the problem to be solved by this application includes: how to enhance Type 2 CG to cope with more frequent frequency domain resource changes (including BWP switching or changes in available RBs, etc.).

As an embodiment, the problem to be solved by this application includes: how to improve the usage efficiency of CG.

As an embodiment, the problem to be solved by this application includes: how to reduce signaling overhead related to CG.

As an embodiment, the problem to be solved by this application includes: how to determine the impact of changes in frequency band configuration on CG uplink grants in MBS scenarios.

As an embodiment, the problem to be solved by this application includes: how to determine the impact of changes in frequency band configuration on CG uplink grants in scenarios supporting XR (Extended Reality) services.

As an embodiment, the problem to be solved by this application includes: how to determine the impact of changes in frequency band configuration on CG uplink grants in V2X/vehicle networking scenarios.

As an embodiment, the problem to be solved by this application includes: how to improve the flexibility of base station scheduling or configuration.

As an embodiment, the problem to be solved by this application includes: how to enhance the mutual understanding and consistency between communication parties regarding CG transmission.

As an embodiment, the benefits of the above method include: improved transmission performance of Type 2 CG.

As an embodiment, the benefits of the above method include: facilitating network energy saving.

As an embodiment, the benefits of the above method include: improved resource utilization.

As an embodiment, the benefits of the above method include: reduced signaling overhead.

As an embodiment, the benefits of the above method include: good compatibility.

As an embodiment, the benefits of the above method include: minimal changes to existing 3GPP standards.

As an embodiment, the first time-frequency resource set is reserved for a PUSCH (Physical Uplink Shared Channel) for the first CG configuration.

As an embodiment, the first time-frequency resource set is reserved for an uplink grant for the first CG configuration.

As an embodiment, the first CG configuration corresponds to a Type 2 CG.

As an embodiment, the first signaling is used to indicate the index corresponding to the first CG configuration.

As an embodiment, the first signaling is used to activate the first CG configuration.

As an embodiment, the uplink grant for the first CG configuration is with respect to the receiving end of the first signaling.

According to an aspect of the present application, the method is characterized in that,
the first CG configuration corresponds to a Type 2 CG.

According to an aspect of the present application, the method is characterized in that,
the first signaling is used to activate the first CG configuration.

According to an aspect of the present application, the method is characterized in that,
when the first condition set is satisfied, there is an uplink grant for the first CG configuration in the first time-frequency resource set; the first condition set includes a first condition, which is related to the relationship between the target frequency band configuration and the first frequency band configuration.

As an embodiment, when the first condition set is not satisfied, there is no uplink grant for the first CG configuration in the first time-frequency resource set.

According to an aspect of the present application, the method is characterized in that,
the first condition is: the target frequency band configuration is the same as the first frequency band configuration; or, the first condition is: the first time-frequency resource set in the frequency domain belongs to the intersection of the frequency domain resources in the target frequency band configuration and the frequency domain resources in the first frequency band configuration.

According to an aspect of the present application, the method is characterized in that,
the first condition set includes a second condition, which is related to the relationship between the first delay and a first reference delay, where the first reference delay is not less than the delay required to complete the change to the target frequency band configuration.

According to an aspect of the present application, the method is characterized in that,
the first frequency band configuration is a BWP, and the target frequency band configuration is either the first frequency band configuration or a BWP other than the first frequency band configuration.

According to an aspect of the present application, the method is characterized in that,
the first frequency band configuration set includes multiple frequency band configurations, all of which are associated with the same BWP, and the first frequency band configuration is one of the multiple frequency band configurations in the first frequency band configuration set; the target frequency band configuration is one of the multiple frequency band configurations in the first frequency band configuration set.

According to an aspect of the present application, the method is characterized in that it comprises:
receiving a first information block, or, transmitting a first information block;
wherein the first information block is used to determine whether there is an uplink grant for the first CG configuration in the first time-frequency resource set, which is related to at least one of: the relationship between the target frequency band configuration and the first frequency band configuration, or the first delay.

As an embodiment, the first information block is used to determine that at least one of the relationship between the target frequency band configuration and the first frequency band configuration, or the first delay, is used to determine whether there is an uplink grant for the first CG configuration in the first time-frequency resource set.

As an embodiment, the first information block is used to indicate that at least one of the relationship between the target frequency band configuration and the first frequency band configuration, or the first delay, is used to determine whether there is an uplink grant for the first CG configuration in the first time-frequency resource set.

As an embodiment, the first information block is used to determine enabling the operation of reactivating a Type 2 CG when the frequency band configuration changes.

As an embodiment, the first information block is used to determine enabling the operation of resuming a suspended Type 2 CG when the frequency band configuration changes.

As an embodiment, the first information block is used to indicate enabling the operation of reactivating a Type 2 CG when the frequency band configuration changes.

As an embodiment, the first information block is used to indicate enabling the operation of resuming a suspended Type 2 CG when the frequency band configuration changes.

As an embodiment, the first information block implicitly indicates enabling the operation of reactivating a Type 2 CG when the frequency band configuration changes.

As an embodiment, the first information block implicitly indicates enabling the operation of resuming a suspended Type 2 CG when the frequency band configuration changes.

As an embodiment, the first information block explicitly indicates enabling the operation of reactivating a Type 2 CG when the frequency band configuration changes.

As an embodiment, the first information block explicitly indicates enabling the operation of resuming a suspended Type 2 CG when the frequency band configuration changes.

As an embodiment, when the first condition set is satisfied, the first node transmits a PUSCH for the first CG configuration in the first time-frequency resource set.

The present application discloses a method for a second node used for wireless communication, characterized in that it comprises:
transmitting first signaling, wherein the first signaling is used to determine a first time-frequency resource set, the first time-frequency resource set is associated with a first CG configuration, and the first time-frequency resource set belongs to frequency domain resources in a first frequency band configuration in the frequency domain;
transmitting second signaling, wherein the second signaling is later than the first signaling;
wherein, the second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether there is an uplink grant for the first CG configuration in the first time-frequency resource set is related to at least one of the relationship between the target frequency band configuration and the first frequency band configuration, or the first delay.

According to an aspect of the present application, the method is characterized in that,
the first CG configuration corresponds to a Type 2 CG.

According to an aspect of the present application, the method is characterized in that,
the first signaling is used to activate the first CG configuration.

According to an aspect of the present application, the method is characterized in that,
when the first condition set is satisfied, there is an uplink grant for the first CG configuration in the first time-frequency resource set; the first condition set includes a first condition, which is related to the relationship between the target frequency band configuration and the first frequency band configuration.

According to an aspect of the present application, the method is characterized in that,
the first condition is: the target frequency band configuration is the same as the first frequency band configuration; or, the first condition is: the first time-frequency resource set in the frequency domain belongs to the intersection of the frequency domain resources in the target frequency band configuration and the frequency domain resources in the first frequency band configuration.

According to an aspect of the present application, the method is characterized in that,
the first condition set includes a second condition, which is related to the relationship between the first delay and a first reference delay, where the first reference delay is not less than the delay required to complete the change to the target frequency band configuration.

According to an aspect of the present application, the method is characterized in that,
the first frequency band configuration is a BWP, and the target frequency band configuration is either the first frequency band configuration or a BWP other than the first frequency band configuration.

According to an aspect of the present application, the method is characterized in that,
the first frequency band configuration set includes multiple frequency band configurations, all of which are associated with the same BWP, and the first frequency band configuration is one of the multiple frequency band configurations in the first frequency band configuration set; the target frequency band configuration is one of the multiple frequency band configurations in the first frequency band configuration set.

According to an aspect of the present application, the method is characterized in that it comprises:
transmitting a first information block, or, receiving a first information block;
wherein the first information block is used to determine whether there is an uplink grant for the first CG configuration in the first time-frequency resource set, which is related to at least one of: the relationship between the target frequency band configuration and the first frequency band configuration, or the first delay.

The present application discloses a first node used for wireless communication, characterized in that it comprises:
a first receiver that receives first signaling, wherein the first signaling is used to determine a first time-frequency resource set, the first time-frequency resource set is associated with a first CG configuration, and the first time-frequency resource set belongs to frequency domain resources in a first frequency band configuration in the frequency domain;
the first receiver receives second signaling, wherein the second signaling is later than the first signaling;
wherein, the second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether there is an uplink grant for the first CG configuration in the first time-frequency resource set is related to at least one of the relationship between the target frequency band configuration and the first frequency band configuration, or the first delay.

According to an aspect of the present application, the method is characterized in that,
the first CG configuration corresponds to a Type 2 CG.

According to an aspect of the present application, the method is characterized in that,
the first signaling is used to activate the first CG configuration.

According to an aspect of the present application, the method is characterized in that,
when the first condition set is satisfied, there is an uplink grant for the first CG configuration in the first time-frequency resource set; the first condition set includes a first condition, which is related to the relationship between the target frequency band configuration and the first frequency band configuration.

As an embodiment, when the first condition set is not satisfied, there is no uplink grant for the first CG configuration in the first time-frequency resource set.

According to an aspect of the present application, the method is characterized in that,
the first condition is: the target frequency band configuration is the same as the first frequency band configuration; or, the first condition is: the first time-frequency resource set in the frequency domain belongs to the intersection of the frequency domain resources in the target frequency band configuration and the frequency domain resources in the first frequency band configuration.

According to an aspect of the present application, the method is characterized in that,
the first condition set includes a second condition, which is related to the relationship between the first delay and a first reference delay, where the first reference delay is not less than the delay required to complete the change to the target frequency band configuration.

According to an aspect of the present application, the method is characterized in that,
the first frequency band configuration is a BWP, and the target frequency band configuration is either the first frequency band configuration or a BWP other than the first frequency band configuration.

According to an aspect of the present application, the method is characterized in that,
the first frequency band configuration set includes multiple frequency band configurations, all of which are associated with the same BWP, and the first frequency band configuration is one of the multiple frequency band configurations in the first frequency band configuration set; the target frequency band configuration is one of the multiple frequency band configurations in the first frequency band configuration set.

According to an aspect of the present application, the method is characterized in that it comprises:
the first receiver receiving a first information block, or, the first transmitter transmitting a first information block;
wherein the first information block is used to determine whether there is an uplink grant for the first CG configuration in the first time-frequency resource set, which is related to at least one of: the relationship between the target frequency band configuration and the first frequency band configuration, or the first delay.

The present application discloses a second node used for wireless communication, characterized in that it comprises:
a second transmitter that transmits first signaling, wherein the first signaling is used to determine a first time-frequency resource set, the first time-frequency resource set is associated with a first CG configuration, and the first time-frequency resource set belongs to frequency domain resources in a first frequency band configuration in the frequency domain;
the second transmitter transmits second signaling, wherein the second signaling is later than the first signaling;
wherein, the second signaling is used to determine the target frequency band configuration, which is the frequency band configuration after a change in the frequency band configuration. The first time-frequency resource set is later in the time domain than the second signaling, and the first delay is equal to the time domain delay between the second signaling and the first time-frequency resource set. Whether there is an uplink grant for the first CG configuration in the first time-frequency resource set is related to at least one of the relationship between the target frequency band configuration and the first frequency band configuration, or the first delay.

### Brief description of the drawings

By referring to the detailed description of the non-limiting embodiments shown in the accompanying drawings, other features, objectives, and advantages of the present application will become more apparent:
Figure 1 illustrates a flowchart of the processing of a first node according to an embodiment of the present application;
Figure 2 illustrates a schematic diagram of a network architecture according to an embodiment of the present application;
Figure 3 illustrates a schematic diagram of the radio protocol architecture for the user plane and control plane according to an embodiment of the present application;
Figure 4 illustrates a schematic diagram of a first communication device and a second communication device according to an embodiment of the present application;
Figure 5 illustrates a flowchart of signal transmission according to an embodiment of the present application;
Figure 6 illustrates a schematic diagram of the relationship between a first condition set and whether the first node receives a PDSCH for a first SPS configuration in a first time-frequency resource set according to an embodiment of the present application;
Figure 7 illustrates a schematic diagram explaining a first condition set according to an embodiment of the present application;
Figure 8 illustrates a schematic diagram explaining a first frequency band configuration and a target frequency band configuration according to an embodiment of the present application;
Figure 9 illustrates a schematic diagram of the relationships among a first frequency band configuration set, multiple frequency band configurations, a first frequency band configuration, and a target frequency band configuration according to an embodiment of the present application;
Figure 10 illustrates a schematic diagram related to a first information block according to an embodiment of the present application;
Figure 11 illustrates a flowchart of the processing of a first node according to an embodiment of the present application;
Figure 12 illustrates a structural block diagram of a processing apparatus in a first node device according to an embodiment of the present application;
Figure 13 illustrates a structural block diagram of a processing apparatus in a second node device according to an embodiment of the present application.

### Embodiments

The technical solutions of the present application will be further described in detail below with reference to the accompanying drawings. It should be noted that, in the absence of conflict, the embodiments of the present application and the features within the embodiments can be arbitrarily combined with each other.

### Embodiment 1

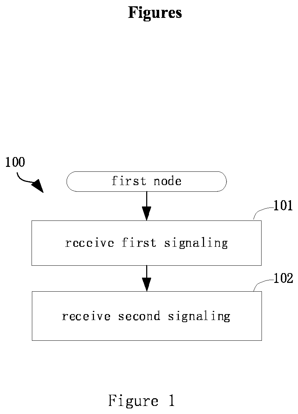

Embodiment 1 exemplifies a flowchart of the processing of a first node according to an embodiment of the present application, as shown in Figure 1.

In Embodiment 1, the first node in the present application receives a first signaling in step 101 and receives a second signaling in step 102.

In Embodiment 1, the first signaling is used to determine a first time-frequency resource set, which is associated with a first SPS configuration, and the first time-frequency resource set belongs to the frequency domain resources of a first frequency band configuration in the frequency domain; the second signaling is later than the first signaling; the second signaling is used to determine a target frequency band configuration, which is the frequency band configuration after a change in the frequency band configuration; the first time-frequency resource set is later than the second signaling in the time domain, and the first delay is equal to the time domain delay between the second signaling and the first time-frequency resource set; whether to receive a PDSCH for the first SPS configuration in the first time-frequency resource set is related to at least one of: the relationship between the target frequency band configuration and the first frequency band configuration, or the first delay.

As an embodiment, the first signaling includes physical layer signaling.

As an embodiment, the first signaling includes DCI (Downlink Control Information).

As an embodiment, the first signaling includes higher layer signaling.

As an embodiment, the first signaling includes MAC CE (Medium Access Control layer Control Element).

As an embodiment, the first signaling includes RRC (Radio Resource Control) signaling.

As an embodiment, the first signaling includes at least one field in at least one IE (Information Element).

As an embodiment, the first signaling includes at least one field in a DCI format.

As an embodiment, the first signaling is a DCI signaling.

As an embodiment, the first signaling is a MAC CE.

As an embodiment, the first signaling includes at least one field in a MAC CE.

As an embodiment, the first signaling is an IE.

As an embodiment, the first signaling is a field in an IE.

As an embodiment, the first signaling is a higher layer parameter.

As an embodiment, the first signaling includes time domain configuration information.

As an embodiment, the first signaling includes SPS configuration information.

As an embodiment, the first signaling includes at least part of the information element SPS-Configure.

As an embodiment, the first signaling is used to indicate the first time-frequency resource set.

As an embodiment, the first signaling is used to indicate the frequency domain resources occupied by the first time-frequency resource set.

As an embodiment, the first signaling is used to indicate the time domain resources occupied by the first time-frequency resource set.

As an embodiment, the first signaling is used to configure the first time-frequency resource set.

As an embodiment, the first signaling is used to configure the frequency domain resources occupied by the first time-frequency resource set.

As an embodiment, the first signaling is used to configure the time domain resources occupied by the first time-frequency resource set.

As an embodiment, the first signaling is used to determine multiple time-frequency resource sets arranged sequentially in the time domain, and the first time-frequency resource set is one of the multiple time-frequency resource sets.

As an embodiment, the first signaling is used to indicate multiple time-frequency resource sets arranged sequentially in the time domain, and the first time-frequency resource set is one of the multiple time-frequency resource sets.

As an embodiment, the multiple time-frequency resource sets are respectively reserved for multiple PDSCHs for the first SPS configuration.

As an embodiment, the multiple time-frequency resource sets respectively belong to multiple time slots in the time domain.

As an embodiment, one of the multiple time-frequency resource sets includes multiple REs (Resource Elements).

As an embodiment, the first time-frequency resource set includes multiple REs.

As an embodiment, the first time-frequency resource set occupies at least one symbol in the time domain.

As an embodiment, a symbol in the present application is an OFDM (Orthogonal Frequency Division Multiplexing) symbol.

As an embodiment, a symbol in the present application is an SC-FDMA (Single Carrier-Frequency Division Multiple Access) symbol.

As an embodiment, a symbol in the present application is a DFT-S-OFDM (Discrete Fourier Transform Spread OFDM) symbol.

As an embodiment, a symbol in the present application is an FBMC (Filter Bank Multi Carrier) symbol.

As an embodiment, a symbol in the present application includes continuous time domain resources.

As an embodiment, a symbol in the present application includes a cyclic prefix.

As an embodiment, a symbol in the present application is one of an uplink symbol (UL symbol), a downlink symbol (DL symbol), or a flexible symbol.

As an embodiment, the first time-frequency resource set occupies at least one subcarrier in the frequency domain.

As an embodiment, the first time-frequency resource set is reserved for a PDSCH for the first SPS configuration.

As an embodiment, the first time-frequency resource set is reserved for a downlink assignment for the first SPS configuration.

As an embodiment, a PDSCH for the first SPS configuration is an SPS PDSCH (Physical Downlink Shared Channel).

As an embodiment, the first SPS configuration is used to configure downlink semi-persistent transmission.

As an embodiment, the first signaling is used to indicate the index corresponding to the first SPS configuration.

As an embodiment, the first signaling is used to activate the first SPS configuration.

As an embodiment, the CRC (Cyclic Redundancy Check) corresponding to the first signaling is scrambled by a CS-RNTI, and the NDI (New Data Indicator) field in the first signaling has a value equal to 0.

As an embodiment, a frequency band configuration in the present application includes at least part of the configuration for a BWP (Bandwidth Part).

As an embodiment, a frequency band configuration in the present application is a BWP.

As an embodiment, a frequency band configuration in the present application is associated with a BWP configuration.

As an embodiment, a frequency band configuration in the present application includes a configuration for Resource Blocks (RBs).

As an embodiment, a frequency band configuration in the present application includes a configuration for the number of Resource Blocks (RBs).

As an embodiment, a frequency band configuration in the present application includes a set of Resource Blocks (RBs).

As an embodiment, a frequency band configuration in the present application includes a configuration for frequency domain resources.

As an embodiment, a frequency band configuration in the present application includes a configuration for bandwidth.

As an embodiment, a frequency band configuration in the present application includes a configuration for physical channels on a BWP.

As an embodiment, a frequency band configuration in the present application includes a configuration for a PDSCH on a BWP.

As an embodiment, a frequency band configuration in the present application includes a configuration for SPS on a BWP.

As an embodiment, a frequency band configuration in the present application includes at least part of the configuration for a downlink BWP.

As an embodiment, a frequency band configuration in the present application is a downlink BWP.

As an embodiment, a frequency band configuration in the present application is associated with a configuration for a downlink BWP.

As an embodiment, a frequency band configuration in the present application includes a configuration for subcarrier spacing.

As an embodiment, the first frequency band configuration includes at least part of the configuration for a BWP (Bandwidth Part).

As an embodiment, the first frequency band configuration is a BWP.

As an embodiment, the first frequency band configuration is associated with a BWP configuration.

As an embodiment, the first frequency band configuration includes a configuration for Resource Blocks (RBs).

As an embodiment, the first frequency band configuration includes a configuration for the number of Resource Blocks (RBs).

As an embodiment, the first frequency band configuration includes a set of Resource Blocks (RBs).

As an embodiment, the first frequency band configuration includes a configuration for frequency domain resources.

As an embodiment, the first frequency band configuration includes a configuration for bandwidth.

As an embodiment, the first frequency band configuration includes a configuration for physical channels on a BWP.

As an embodiment, the first frequency band configuration includes a configuration for a PDSCH on a BWP.

As an embodiment, the first frequency band configuration includes a configuration for SPS on a BWP.

As an embodiment, the first frequency band configuration includes at least part of the configuration for a downlink BWP.

As an embodiment, the first frequency band configuration is a downlink BWP.

As an embodiment, the first frequency band configuration is associated with a configuration for a downlink BWP.

As an embodiment, the first frequency band configuration includes a configuration for subcarrier spacing.

As an embodiment, the first frequency band configuration is a BWP, and the first time-frequency resource set belongs to the frequency domain resources occupied by this BWP in the frequency domain.

As an embodiment, the frequency domain resources configured by the first frequency band configuration include the frequency domain resources occupied by the first time-frequency resource set.

As an embodiment, from the perspective of the frequency domain, all RBs occupied by the first time-frequency resource set belong to the first frequency band configuration.

As an embodiment, the second signaling includes physical layer signaling.

As an embodiment, the second signaling includes DCI (Downlink Control Information).

As an embodiment, the second signaling includes higher layer signaling.

As an embodiment, the second signaling includes MAC CE (Medium Access Control layer Control Element).

As an embodiment, the second signaling includes RRC (Radio Resource Control) signaling.

As an embodiment, the second signaling includes at least one field in at least one IE (Information Element).

As an embodiment, the second signaling includes at least one field in a DCI format.

As an embodiment, the second signaling is a DCI signaling.

As an embodiment, the second signaling is a MAC CE.

As an embodiment, the second signaling includes at least one field in a MAC CE.

As an embodiment, the second signaling is an IE.

As an embodiment, the second signaling is a field in an IE.

As an embodiment, the second signaling is a higher layer parameter.

As an embodiment, the second signaling includes time domain configuration information.

As an embodiment, the second signaling includes SPS configuration information.

As an embodiment, the second signaling includes at least part of the information element SPS-Configure.

As an embodiment, the second signaling includes a BWP indicator field in a DCI format.

As an embodiment, the time domain resources occupied by the second signaling are later than the time domain resources occupied by the first signaling.

As an embodiment, the start time of the second signaling in the time domain is later than the end time of the first signaling in the time domain.

As an embodiment, the time slot to which the second signaling belongs in the time domain is later than the time slot to which the first signaling belongs in the time domain.

As an embodiment, the second signaling is used to indicate the target frequency band configuration.

As an embodiment, the second signaling is used to configure the target frequency band configuration.

As an embodiment, the second signaling is used to determine a change in the frequency band configuration.

As an embodiment, the second signaling is used to indicate a change in the frequency band configuration.

As an embodiment, the second signaling is used to indicate a change from a frequency band configuration other than the target frequency band configuration to the target frequency band configuration.

As an embodiment, the first time-frequency resource set belongs in the time domain to a duration during which the target frequency band configuration is effective.

As an embodiment, the expression that the target frequency band configuration is effective includes: the target frequency band configuration is a BWP, and this BWP is activated.

As an embodiment, the expression that the target frequency band configuration is effective includes: the first node completes switching to the target frequency band configuration.

As an embodiment, the expression that the target frequency band configuration is effective includes: the frequency domain resources in the target frequency band configuration are available.

As an embodiment, the expression that the target frequency band configuration is effective includes: the target frequency band configuration is in an activated state.

As an embodiment, the expression that the target frequency band configuration is effective includes: the RBs in the target frequency band configuration can be used for PDSCH transmission.

As an embodiment, the frequency domain resources in a frequency band configuration in the present application are the frequency domain resources configured in that frequency band configuration.

As an embodiment, the frequency domain resources in a frequency band configuration in the present application are the frequency domain resources included in that frequency band configuration in the frequency domain.

As an embodiment, the first delay is greater than the BWP switch delay required to change to the target frequency band configuration.

As an embodiment, the time domain resources occupied by the first time-frequency resource set are later than the time domain resources occupied by the second signaling.

As an embodiment, the start time of the first time-frequency resource set in the time domain is later than the end time of the second signaling in the time domain.

As an embodiment, the first delay is equal to a time length.

As an embodiment, the first delay is measured in slots.

As an embodiment, the first delay is measured in symbols.

As an embodiment, the first delay is measured in milliseconds (ms).

As an embodiment, the first delay is measured in subframes.

As an embodiment, the first delay is equal to the number of a positive integer of slots.

As an embodiment, the first delay is equal to the number of a positive integer of symbols.

As an embodiment, the first delay is equal to a positive integer of milliseconds.

As an embodiment, the first delay is equal to the number of a positive integer of subframes.

As an embodiment, the first delay is equal to the duration occupied by a positive integer of slots.

As an embodiment, the first delay is equal to the duration occupied by a positive integer of symbols.

As an embodiment, the first delay is equal to a positive integer of milliseconds.

As an embodiment, the first delay is equal to the duration occupied by a positive integer of subframes.

As an embodiment, the delay in the time domain between the second signaling and the first time-frequency resource set refers to the time difference in the time domain between the second signaling and the first time-frequency resource set.

As an embodiment, the delay in the time domain between the second signaling and the first time-frequency resource set refers to the time difference between the time slot to which the second signaling belongs in the time domain and the time slot to which the first time-frequency resource set belongs in the time domain.

As an embodiment, the delay in the time domain between the second signaling and the first time-frequency resource set refers to the time difference between the time slot to which the second signaling belongs in the time domain and the earliest time slot occupied by the first time-frequency resource set.

As an embodiment, the delay in the time domain between the second signaling and the first time-frequency resource set is associated with the time slot to which the second signaling belongs in the time domain and the time slot to which the first time-frequency resource set belongs in the time domain.

As an embodiment, the delay in the time domain between the second signaling and the first time-frequency resource set is associated with the time slot to which the second signaling belongs in the time domain and at least one time slot occupied by the first time-frequency resource set in the time domain.

As an embodiment, the delay in the time domain between the second signaling and the first time-frequency resource set is not less than the duration from the start of the first time slot after the time slot to which the second signaling belongs in the time domain to the start of the time slot to which the first time-frequency resource set belongs in the time domain.

As an embodiment, the delay in the time domain between the second signaling and the first time-frequency resource set is not less than the duration from the start of the first time slot after the time slot to which the second signaling belongs in the time domain to the start of the earliest time slot occupied by the first time-frequency resource set in the time domain.

As an embodiment, the delay in the time domain between the second signaling and the first time-frequency resource set is not less than the duration from the start of the time slot to which the second signaling belongs in the time domain to the start of the time slot to which the first time-frequency resource set belongs in the time domain.

As an embodiment, the delay in the time domain between the second signaling and the first time-frequency resource set is not less than the duration from the start of the time slot to which the second signaling belongs in the time domain to the start of the earliest time slot occupied by the first time-frequency resource set in the time domain.

As an embodiment, the delay in the time domain between the second signaling and the first time-frequency resource set is not less than the duration from the end of the time slot to which the second signaling belongs in the time domain to the start of the earliest time slot occupied by the first time-frequency resource set in the time domain.

As an embodiment, the expression of the delay in the time domain between the second signaling and the first time-frequency resource set includes: the number of slots between the time slot to which the second signaling belongs in the time domain and the time slot to which the first time-frequency resource set belongs in the time domain.

As an embodiment, the expression of the delay in the time domain between the second signaling and the first time-frequency resource set includes: the number of slots between the time slot to which the second signaling belongs in the time domain and the earliest time slot occupied by the first time-frequency resource set in the time domain.

As an embodiment, when at least part of the first time-frequency resource set belongs to a time slot in the time domain, this time slot is considered the time slot occupied by the first time-frequency resource set in the time domain.

As an embodiment, the expression of the delay in the time domain between the second signaling and the first time-frequency resource set includes: the number of slots from the start of the time slot to which the second signaling belongs in the time domain to the slot immediately preceding the time slot to which the first time-frequency resource set belongs in the time domain.

As an embodiment, the expression of the delay in the time domain between the second signaling and the first time-frequency resource set includes: the number of slots from the start of the time slot to which the second signaling belongs in the time domain to the slot immediately preceding the earliest time slot occupied by the first time-frequency resource set in the time domain.

As an embodiment, the expression of the delay in the time domain between the second signaling and the first time-frequency resource set includes: the duration from the start of the time slot to which the second signaling belongs in the time domain to the start of the time slot to which the first time-frequency resource set belongs in the time domain.

As an embodiment, the expression of the delay in the time domain between the second signaling and the first time-frequency resource set includes: the duration from the start of the time slot to which the second signaling belongs in the time domain to the start of the earliest time slot occupied by the first time-frequency resource set in the time domain.

As an embodiment, the expression of the delay in the time domain between the second signaling and the first time-frequency resource set includes: the number of slots from the start of the first time slot after the time slot to which the second signaling belongs in the time domain to the slot immediately preceding the time slot to which the first time-frequency resource set belongs in the time domain.

As an embodiment, the expression of the delay in the time domain between the second signaling and the first time-frequency resource set includes: the number of slots from the start of the first time slot after the time slot to which the second signaling belongs in the time domain to the slot immediately preceding the earliest time slot occupied by the first time-frequency resource set in the time domain.

As an embodiment, the expression of the delay in the time domain between the second signaling and the first time-frequency resource set includes: the duration from the start of the first time slot after the time slot to which the second signaling belongs in the time domain to the start of the time slot to which the first time-frequency resource set belongs in the time domain.

As an embodiment, the expression of the delay in the time domain between the second signaling and the first time-frequency resource set includes: the duration from the start of the first time slot after the time slot to which the second signaling belongs in the time domain to the start of the earliest time slot occupied by the first time-frequency resource set in the time domain.

As an embodiment, the expression of the delay in the time domain between the second signaling and the first time-frequency resource set includes: the number of slots from the start of the time slot to which the second signaling belongs in the time domain to the time slot to which the first time-frequency resource set belongs in the time domain.

As an embodiment, the expression of the delay in the time domain between the second signaling and the first time-frequency resource set includes: the number of slots from the start of the time slot to which the second signaling belongs in the time domain to the earliest time slot occupied by the first time-frequency resource set in the time domain.

As an embodiment, the expression of the delay in the time domain between the second signaling and the first time-frequency resource set includes: the duration from the start of the time slot to which the second signaling belongs in the time domain to the end of the time slot to which the first time-frequency resource set belongs in the time domain.

As an embodiment, the expression of the delay in the time domain between the second signaling and the first time-frequency resource set includes: the duration from the start of the time slot to which the second signaling belongs in the time domain to the end of the earliest time slot occupied by the first time-frequency resource set in the time domain.

As an embodiment, the expression of the delay in the time domain between the second signaling and the first time-frequency resource set includes: the number of slots from the start of the first time slot after the time slot to which the second signaling belongs in the time domain to the time slot to which the first time-frequency resource set belongs in the time domain.

As an embodiment, the expression of the delay in the time domain between the second signaling and the first time-frequency resource set includes: the number of slots from the start of the first time slot after the time slot to which the second signaling belongs in the time domain to the earliest time slot occupied by the first time-frequency resource set in the time domain.

As an embodiment, the expression of the delay in the time domain between the second signaling and the first time-frequency resource set includes: the duration from the start of the first time slot after the time slot to which the second signaling belongs in the time domain to the end of the time slot to which the first time-frequency resource set belongs in the time domain.

As an embodiment, the expression of the delay in the time domain between the second signaling and the first time-frequency resource set includes: the duration from the start of the first time slot after the time slot to which the second signaling belongs in the time domain to the end of the earliest time slot occupied by the first time-frequency resource set in the time domain.

As an embodiment, the expression of the delay in the time domain between the second signaling and the first time-frequency resource set includes: the duration from the start of the first symbol after the last symbol occupied by the second signaling in the time domain to the start of the earliest symbol occupied by the first time-frequency resource set in the time domain.

As an embodiment, the expression of the delay in the time domain between the second signaling and the first time-frequency resource set includes: the number of symbols from the start of the first symbol after the last symbol occupied by the second signaling in the time domain to the symbol immediately preceding the earliest symbol occupied by the first time-frequency resource set in the time domain.

As an embodiment, the expression of the delay in the time domain between the second signaling and the first time-frequency resource set includes: the duration from the start of the last symbol occupied by the second signaling in the time domain to the start of the earliest symbol occupied by the first time-frequency resource set in the time domain.

As an embodiment, the expression of the delay in the time domain between the second signaling and the first time-frequency resource set includes: the number of symbols from the start of the last symbol occupied by the second signaling in the time domain to the symbol immediately preceding the earliest symbol occupied by the first time-frequency resource set in the time domain.

As an embodiment, the expression of the delay in the time domain between the second signaling and the first time-frequency resource set includes: the number of slots from the time slot in which a PUCCH carrying HARQ-ACK bits generated for the PDSCH providing the second signaling is transmitted to the slot immediately preceding the earliest time slot occupied by the first time-frequency resource set in the time domain.

As an embodiment, the expression of the delay in the time domain between the second signaling and the first time-frequency resource set includes: the duration from the start of the time slot in which a PUCCH carrying HARQ-ACK bits generated for the PDSCH providing the second signaling is transmitted to the start of the earliest time slot occupied by the first time-frequency resource set in the time domain.

As an embodiment, the expression of the delay in the time domain between the second signaling and the first time-frequency resource set includes: the number of slots from the start of the first time slot after the time slot in which a PUCCH carrying HARQ-ACK bits generated for the PDSCH providing the second signaling is transmitted to the slot immediately preceding the earliest time slot occupied by the first time-frequency resource set in the time domain.

As an embodiment, the expression of the delay in the time domain between the second signaling and the first time-frequency resource set includes: the duration from the start of the first time slot after the time slot in which a PUCCH carrying HARQ-ACK bits generated for the PDSCH providing the second signaling is transmitted to the start of the earliest time slot occupied by the first time-frequency resource set in the time domain.

As an embodiment, the expression of the delay in the time domain between the second signaling and the first time-frequency resource set includes: the duration from the end of the third symbol of the time slot to which the second signaling belongs in the time domain to the start of the time slot to which the first time-frequency resource set belongs in the time domain.

As an embodiment, the expression of the delay in the time domain between the second signaling and the first time-frequency resource set includes: the duration from the end of the third symbol of the time slot to which the second signaling belongs in the time domain to the start of the earliest time slot occupied by the first time-frequency resource set in the time domain.

As an embodiment, the expression of the delay in the time domain between the second signaling and the first time-frequency resource set includes: the duration from the end of the third symbol of the time slot to which the second signaling belongs in the time domain to the end of the time slot to which the first time-frequency resource set belongs in the time domain.

As an embodiment, the expression of the delay in the time domain between the second signaling and the first time-frequency resource set includes: the duration from the end of the third symbol of the time slot to which the second signaling belongs in the time domain to the end of the earliest time slot occupied by the first time-frequency resource set in the time domain.

As an embodiment, the expression of the relationship between the target frequency band configuration and the first frequency band configuration includes: whether the first time-frequency resource set belongs to the frequency domain resources in the target frequency band configuration in the frequency domain.

As an embodiment, the expression of the relationship between the target frequency band configuration and the first frequency band configuration includes: whether the target frequency band configuration is the same as the first frequency band configuration.

As an embodiment, the expression of the relationship between the target frequency band configuration and the first frequency band configuration includes: whether there is an overlap between the target frequency band configuration and the first frequency band configuration.

As an embodiment, the expression that whether to receive a PDSCH for the first SPS configuration in the first time-frequency resource set is related to at least one of the relationship between the target frequency band configuration and the first frequency band configuration or the first delay includes: at least one of the relationship between the target frequency band configuration and the first frequency band configuration or the first delay is used to determine whether to receive a PDSCH for the first SPS configuration in the first time-frequency resource set.

As an embodiment, the expression that whether to receive a PDSCH for the first SPS configuration in the first time-frequency resource set is related to at least one of the relationship between the target frequency band configuration and the first frequency band configuration or the first delay includes: whether to receive a PDSCH for the first SPS configuration in the first time-frequency resource set is related to whether a first condition set is satisfied, the first condition set including conditions related to at least one of the relationship between the target frequency band configuration and the first frequency band configuration or the first delay.

As an embodiment, the expression whether to receive a PDSCH for the first SPS configuration in the first time-frequency resource set is related to at least one of the relationships between the target frequency band configuration and the first frequency band configuration or the first delay includes:
when a first condition set is satisfied, receiving a PDSCH for the first SPS configuration in the first time-frequency resource set; the first condition set includes a first condition, which is related to the relationship between the target frequency band configuration and the first frequency band configuration.

As an embodiment, the expression whether to receive a PDSCH for the first SPS configuration in the first time-frequency resource set is related to at least one of the relationships between the target frequency band configuration and the first frequency band configuration or the first delay includes:
when the first condition set is satisfied, receiving a PDSCH for the first SPS configuration in the first time-frequency resource set; the first condition set includes a second condition, which is related to the first delay.

As an embodiment, the first node, when receiving a PDSCH for the first SPS configuration in the first time-frequency resource set, transmits a first HARQ-ACK bit block, which includes HARQ-ACK bits for the PDSCH received in the first time-frequency resource set for the first SPS configuration.

As an embodiment, receiving a PDSCH means receiving a transport block (TB) in this PDSCH.

As an embodiment, receiving a PDSCH means receiving a code block group (CBG) in this PDSCH.

As an embodiment, receiving a PDSCH means performing signal reception in this PDSCH.

As an embodiment, receiving a PDSCH means performing at least channel decoding on the signal received in this PDSCH.

### Embodiment 2

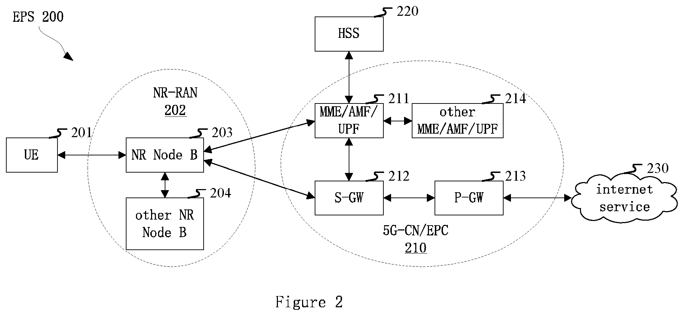

Embodiment 2 exemplifies a schematic diagram of a network architecture according to an embodiment of the present application, as shown in Figure 2.

Figure 2 illustrates the network architecture 200 for 5G NR, LTE (Long-Term Evolution), and LTE-A (Long-Term Evolution Advanced) systems. The 5G NR or LTE network architecture 200 may be referred to as EPS (Evolved Packet System) 200 or some other suitable term. The EPS 200 may include one or more UEs (User Equipment) 201, NG-RAN (Next Generation Radio Access Network) 202, EPC (Evolved Packet Core)/5G-CN (5G Core Network) 210, HSS (Home Subscriber Server) 220, and Internet services 230. The EPS may interconnect with other access networks, but these entities/interfaces are not shown for simplicity. As illustrated, the EPS provides packet-switched services; however, those skilled in the art will readily understand that the various concepts presented throughout this application can be extended to networks providing circuit-switched services or other cellular networks. The NG-RAN includes NR Node B (gNB) 203 and other gNBs 204. The gNB 203 provides user and control plane protocol terminations toward the UE 201. The gNB 203 may be connected to other gNBs 204 via an Xn interface (e.g., backhaul). The gNB 203 may also be referred to as a base station, base transceiver station, radio base station, radio transceiver, transceiver function, Basic Service Set (BSS), Extended Service Set (ESS), TRP (Transmission Reception Point), or some other suitable term. The gNB 203 provides an access point to the EPC/5G-CN 210 for the UE 201. Examples of the UE 201 include cellular phones, smartphones, Session Initiation Protocol (SIP) phones, laptops, personal digital assistants (PDAs), satellite radios, non-terrestrial base station communications, satellite mobile communications, global positioning systems, multimedia devices, video devices, digital audio players (e.g., MP3 players), cameras, gaming consoles, drones, aircraft, narrowband IoT devices, machine-type communication devices, land vehicles, automobiles, wearable devices, or any other similar functional devices. Those skilled in the art may also refer to the UE 201 as a mobile station, subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable term. The gNB 203 is connected to the EPC/5G-CN 210 via an S1/NG interface. The EPC/5G-CN 210 includes MME (Mobility Management Entity)/AMF (Authentication Management Field)/UPF (User Plane Function) 211, other MME/AMF/UPF 214, S-GW (Service Gateway) 212, and P-GW (Packet Date Network Gateway) 213. The MME/AMF/UPF 211 is a control node that handles signaling between the UE 201 and the EPC/5G-CN 210. Generally, the MME/AMF/UPF 211 provides bearer and connection management. All user IP (Internet Protocal) packets are transmitted through the S-GW 212, which itself is connected to the P-GW 213. The P-GW 213 provides UE IP address allocation and other functions. The P-GW 213 is connected to Internet services 230. The Internet services 230 include operator-specific Internet protocol services, which may specifically include the Internet, intranet, IMS (IP Multimedia Subsystem), and packet-switched streaming services.

As an embodiment, the UE 201 corresponds to the first node in the present application.

As an embodiment, the UE 201 corresponds to the second node in the present application.

As an embodiment, the gNB 203 corresponds to the first node in the present application.

As an embodiment, the gNB 203 corresponds to the second node in the present application.

As an embodiment, the UE 201 corresponds to the first node in the present application, and the gNB 203 corresponds to the second node in the present application.

As an embodiment, the gNB 203 is a marcocellular base station.

As an embodiment, the gNB 203 is a micro cell base station.

As an embodiment, the gNB 203 is a pico cell base station.

As an embodiment, the gNB 203 is a femtocell base station.

As an embodiment, the gNB 203 is a base station device supporting large delay differences.

As an embodiment, the gNB 203 is a flight platform device.

As an embodiment, the gNB 203 is a satellite device.

As an embodiment, both the first node and the second node in the present application correspond to the UE 201, for example, performing V2X communication between the first node and the second node.

### Embodiment 3

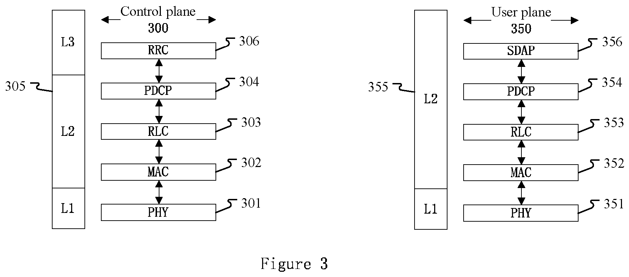

Embodiment 3 illustrates a schematic diagram of a radio protocol architecture for the user plane and control plane according to an embodiment of the present application, as shown in Figure 3. Figure 3 is a schematic diagram illustrating an embodiment of the radio protocol architecture for the user plane 350 and control plane 300, showing three layers for a first communication node device (UE, gNB, or RSU in V2X) and a second communication node device (gNB, UE, or RSU in V2X), or between two UEs for the control plane 300: Layer 1, Layer 2, and Layer 3. Layer 1 (L1 layer) is the lowest layer and implements various PHY (physical layer) signal processing functions. The L1 layer is referred to herein as PHY 301. Layer 2 (L2 layer) 305 is above PHY 301 and is responsible for the link between the first communication node device, the second communication node device, and two UEs via PHY 301. The L2 layer 305 includes a MAC (Medium Access Control) sublayer 302, an RLC (Radio Link Control) sublayer 303, and a PDCP (Packet Data Convergence Protocol) sublayer 304, which terminates at the second communication node device. The PDCP sublayer 304 provides multiplexing between different radio bearers and logical channels. The PDCP sublayer 304 also provides security by encrypting data packets and supports handover for the first communication node device between second communication node devices. The RLC sublayer 303 provides segmentation and reassembly of upper-layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) within a cell among the first communication node devices. The MAC sublayer 302 is also responsible for HARQ operations. In the control plane 300, the RRC (Radio Resource Control) sublayer 306 in Layer 3 (L3 layer) is responsible for acquiring radio resources (i.e., radio bearers) and configuring the lower layers using RRC signaling between the second communication node device and the first communication node device. The radio protocol architecture for the user plane 350 includes Layer 1 (L1 layer) and Layer 2 (L2 layer). In the user plane 350, the radio protocol architecture for the first communication node device and the second communication node device is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper-layer data packets to reduce radio transmission overhead. The L2 layer 355 in the user plane 350 also includes an SDAP (Service Data Adaptation Protocol) sublayer 356, which is responsible for mapping between QoS flows and Data Radio Bearers (DRBs) to support service diversity. Although not shown, the first communication node device may have several upper layers above the L2 layer 355, including a network layer (e.g., IP layer) terminating at the P-GW on the network side and an application layer terminating at the other end of the connection (e.g., remote UE, server, etc.).

As an embodiment, the radio protocol architecture in Figure 3 is applicable to the first node in the present application.

As an embodiment, the radio protocol architecture in Figure 3 is applicable to the second node in the present application.

As an embodiment, at least part of the first information block in the present application is generated in the RRC sublayer 306.

As an embodiment, at least part of the first information block in the present application is generated in the MAC sublayer 302.

As an embodiment, at least part of the first information block in the present application is generated in the MAC sublayer 352.

As an embodiment, at least part of the first information block in the present application is generated in the PHY 301.

As an embodiment, at least part of the first information block in the present application is generated in the PHY 351.

As an embodiment, at least part of the first signaling in the present application is generated in the RRC sublayer 306.

As an embodiment, at least part of the first signaling in the present application is generated in the MAC sublayer 302.

As an embodiment, at least part of the first signaling in the present application is generated in the MAC sublayer 352.

As an embodiment, at least part of the first signaling in the present application is generated in the PHY 301.

As an embodiment, at least part of the first signaling in the present application is generated in the PHY 351.

As an embodiment, at least part of the second signaling in the present application is generated in the RRC sublayer 306.

As an embodiment, at least part of the second signaling in the present application is generated in the MAC sublayer 302.

As an embodiment, at least part of the second signaling in the present application is generated in the MAC sublayer 352.

As an embodiment, at least part of the second signaling in the present application is generated in the PHY 301.

As an embodiment, at least part of the second signaling in the present application is generated in the PHY 351.

### Embodiment 4

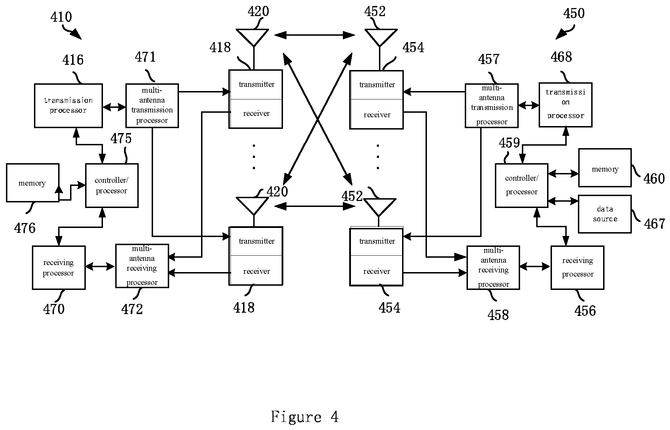

Embodiment 4 illustrates a schematic diagram of a first communication device and a second communication device according to the present application, as shown in Figure 4. Figure 4 is a block diagram of a first communication device 410 and a second communication device 450 communicating with each other in an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In transmission from the first communication device 410 to the second communication device 450, at the first communication device 410, upper-layer data packets from the core network are provided to the controller/processor 475. The controller/processor 475 implements the functionality of the L2 layer. In transmission from the first communication device 410 to the second communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for the L1 layer (i.e., physical layer). The transmitting processor 416 performs coding and interleaving to facilitate forward error correction (FEC) at the second communication device 450 and maps signal constellations based on various modulation schemes (e.g., Binary Phase Shift Keying (BPSK), Quadrature Phase Shift Keying (QPSK), M-Phase Shift Keying (M-PSK), M-Quadrature Amplitude Modulation (M-QAM)). The multi-antenna transmitting processor 471 performs digital spatial precoding, including codebook-based and non-codebook-based precoding, and beamforming on the coded and modulated symbols to generate one or more spatial streams. The transmitting processor 416 then maps each spatial stream to subcarriers, multiplexes with reference signals (e.g., pilots) in the time and/or frequency domain, and uses an Inverse Fast Fourier Transform (IFFT) to generate a physical channel carrying a time-domain multi-carrier symbol stream. The multi-antenna transmitting processor 471 then performs transmit analog precoding/beamforming operations on the time-domain multi-carrier symbol stream. Each transmitter 418 converts the baseband multi-carrier symbol stream provided by the multi-antenna transmitting processor 471 into a radio frequency (RF) stream, which is then provided to different antennas 420.

In transmission from the first communication device 410 to the second communication device 450, at the second communication device 450, each receiver 454 receives signals through its respective antenna 452. Each receiver 454 recovers information modulated onto an RF carrier, converts the RF stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receive analog precoding/beamforming operations on the baseband multi-carrier symbol stream from the receiver 454. The receiving processor 456 uses a Fast Fourier Transform (FFT) to convert the baseband multi-carrier symbol stream after receiving analog precoding/beamforming from the time domain to the frequency domain. In the frequency domain, the physical layer data signals and reference signals are demultiplexed by the receiving processor 456, where the reference signals are used for channel estimation, and the data signals are subjected to multi-antenna detection in the multi-antenna receiving processor 458 to recover any spatial streams destined for the second communication device 450. The symbols on each spatial stream are demodulated and recovered in the receiving processor 456 to generate soft decisions. The receiving processor 456 then decodes and deinterleaves the soft decisions to recover the upper-layer data and control signals transmitted by the first communication device 410 on the physical channel. The upper-layer data and control signals are then provided to the controller/processor 459. The controller/processor 459 implements the functionality of the L2 layer. The controller/processor 459 may be associated with a memory 460 that stores program code and data. The memory 460 may be referred to as a computer-readable medium. In transmission from the first communication device 410 to the second communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to L3 for L3 processing.

In transmission from the second communication device 450 to the first communication device 410, at the second communication device 450, a data source 467 is used to provide upper-layer data packets to the controller/processor 459. The data source 467 represents all protocol layers above the L2 layer. Similar to the transmission functions described for the first communication device 410 in the transmission from the first communication device 410 to the second communication device 450, the controller/processor 459 performs header compression, encryption, packet segmentation and reordering, and multiplexing between logical and transport channels based on radio resource allocation, implementing L2 layer functions for the user plane and control plane. The controller/processor 459 is also responsible for retransmission of lost packets and signaling to the first communication device 410. The transmitting processor 468 performs modulation mapping and channel coding, and the multi-antenna transmitting processor 457 performs digital multi-antenna spatial precoding, including codebook-based and non-codebook-based precoding, as well as beamforming. Subsequently, the transmitting processor 468 modulates the generated spatial streams into multi-carrier/single-carrier symbol streams, which undergo analog precoding/beamforming operations in the multi-antenna transmitting processor 457 before being provided to different antennas 452 via the transmitter 454. Each transmitter 454 first converts the baseband symbol stream provided by the multi-antenna transmitting processor 457 into a radio frequency (RF) symbol stream, which is then provided to the antenna 452.

In transmission from the second communication device 450 to the first communication device 410, the functionality at the first communication device 410 is similar to the receiving functionality described for the second communication device 450 in the transmission from the first communication device 410 to the second communication device 450. Each receiver 418 receives RF signals through its respective antenna 420, converts the received RF signals into baseband signals, and provides the baseband signals to the multi-antenna receiving processor 472 and the receiving processor 470. The receiving processor 470 and the multi-antenna receiving processor 472 jointly implement the functionality of the L1 layer. The controller/processor 475 implements L2 layer functions. The controller/processor 475 may be associated with a memory 476 that stores program code and data. The memory 476 may be referred to as a computer-readable medium. In transmission from the second communication device 450 to the first communication device 410, the controller/processor 475 provides demultiplexing between transport and logical channels, packet reassembly, decryption, header decompression, and control signal processing to recover upper-layer data packets from the UE 450. The upper-layer data packets from the controller/processor 475 may be provided to the core network.

As an embodiment, the first node in the present application includes the second communication device 450, and the second node in the present application includes the first communication device 410.

As a sub-embodiment of the above embodiment, the first node is a user equipment, and the second node is a user equipment.

As a sub-embodiment of the above embodiment, the first node is a user equipment, and the second node is a relay node.

As a sub-embodiment of the above embodiment, the first node is a relay node, and the second node is a user equipment.

As a sub-embodiment of the above embodiment, the first node is a user equipment, and the second node is a base station device.

As a sub-embodiment of the above embodiment, the first node is a relay node, and the second node is a base station device.

As a sub-embodiment of the above embodiment, the second node is a user equipment, and the first node is a base station device.

As a sub-embodiment of the above embodiment, the second node is a relay node, and the first node is a base station device.

As a sub-embodiment of the above embodiment, the second communication device 450 includes: at least one controller/processor; the at least one controller/processor is responsible for HARQ operations.

As a sub-embodiment of the above embodiment, the first communication device 410 includes: at least one controller/processor; the at least one controller/processor is responsible for HARQ operations.

As a sub-embodiment of the above embodiment, the first communication device 410 includes: at least one controller/processor; the at least one controller/processor is responsible for using positive acknowledgment (ACK) and/or negative acknowledgment (NACK) protocols for error detection to support HARQ operations.

As an embodiment, the second communication device 450 includes: at least one processor and at least one memory, the at least one memory including computer program code; the at least one memory and the computer program code are configured to be used with at least one processor. The second communication device 450 at least: receives a first signaling, the first signaling being used to determine a first time-frequency resource set, the first time-frequency resource set being associated with a first SPS configuration, the first time-frequency resource set belonging to frequency domain resources of a first frequency band configuration in the frequency domain; receives a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether to receive a PDSCH for the first SPS configuration in the first time-frequency resource set is related to at least one of: the relationship between the target frequency band configuration and the first frequency band configuration, or the first delay.

As a sub-embodiment of the above embodiment, the second communication device 450 corresponds to the first node in the present application.

As an embodiment, the second communication device 450 includes: a memory storing a computer-readable instruction program, the computer-readable instruction program generating actions when executed by at least one processor, the actions including: receiving a first signaling, the first signaling being used to determine a first time-frequency resource set, the first time-frequency resource set being associated with a first SPS configuration, the first time-frequency resource set belonging to frequency domain resources of a first frequency band configuration in the frequency domain; receiving a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether to receive a PDSCH for the first SPS configuration in the first time-frequency resource set is related to at least one of: the relationship between the target frequency band configuration and the first frequency band configuration, or the first delay.

As a sub-embodiment of the above embodiment, the second communication device 450 corresponds to the first node in the present application.

As an embodiment, the first communication device 410 includes: at least one processor and at least one memory, the at least one memory including computer program code; the at least one memory and the computer program code are configured to be used with at least one processor. The first communication device 410 at least: transmits a first signaling, the first signaling being used to determine a first time-frequency resource set, the first time-frequency resource set being associated with a first SPS configuration, the first time-frequency resource set belonging to frequency domain resources of a first frequency band configuration in the frequency domain; transmits a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether the receiving end of the first signaling receives a PDSCH for the first SPS configuration in the first time-frequency resource set is related to at least one of: the relationship between the target frequency band configuration and the first frequency band configuration, or the first delay.

As a sub-embodiment of the above embodiment, the first communication device 410 corresponds to the second node in the present application.

As an embodiment, the first communication device 410 includes: a memory storing a computer-readable instruction program, the computer-readable instruction program generating actions when executed by at least one processor, the actions including: transmitting a first signaling, the first signaling being used to determine a first time-frequency resource set, the first time-frequency resource set being associated with a first SPS configuration, the first time-frequency resource set belonging to frequency domain resources of a first frequency band configuration in the frequency domain; transmitting a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether the receiving end of the first signaling receives a PDSCH for the first SPS configuration in the first time-frequency resource set is related to at least one of: the relationship between the target frequency band configuration and the first frequency band configuration, or the first delay.

As a sub-embodiment of the above embodiment, the first communication device 410 corresponds to the second node in the present application.

As an embodiment, at least one of {the antenna 452, the receiver 454, the multi-antenna receiving processor 458, the receiving processor 456, the controller/processor 459, the memory 460, the data source 467} is used to receive the first information block in the present application.

As an embodiment, at least one of {the antenna 420, the transmitter 418, the multi-antenna transmitting processor 471, the transmitting processor 416, the controller/processor 475, the memory 476} is used to transmit the first information block in the present application.

As an embodiment, at least one of {the antenna 452, the transmitter 454, the multi-antenna transmitting processor 458, the transmitting processor 468, the controller/processor 459, the memory 460, the data source 467} is used to transmit the first information block in the present application.

As an embodiment, at least one of {the antenna 420, the receiver 418, the multi-antenna receiving processor 472, the receiving processor 470, the controller/processor 475, the memory 476} is used to receive the first information block in the present application.

As an embodiment, at least one of {the antenna 452, the receiver 454, the multi-antenna receiving processor 458, the receiving processor 456, the controller/processor 459, the memory 460, the data source 467} is used to receive the second signaling in the present application.

As an embodiment, at least one of {the antenna 420, the transmitter 418, the multi-antenna transmitting processor 471, the transmitting processor 416, the controller/processor 475, the memory 476} is used to transmit the second signaling in the present application.

As an embodiment, at least one of {the antenna 452, the receiver 454, the multi-antenna receiving processor 458, the receiving processor 456, the controller/processor 459, the memory 460, the data source 467} is used to receive the first signaling in the present application.

As an embodiment, at least one of {the antenna 420, the transmitter 418, the multi-antenna transmitting processor 471, the transmitting processor 416, the controller/processor 475, the memory 476} is used to transmit the first signaling in the present application.

As an embodiment, the second communication device 450 includes: at least one processor and at least one memory, the at least one memory including computer program code; the at least one memory and the computer program code are configured to be used with at least one processor. The second communication device 450 at least: receives a first signaling, the first signaling being used to determine a first time-frequency resource set, the first time-frequency resource set being associated with a first CG configuration, the first time-frequency resource set belonging to frequency domain resources of a first frequency band configuration in the frequency domain; receives a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of: the relationship between the target frequency band configuration and the first frequency band configuration, or the first delay.

As a sub-embodiment of the above embodiment, the second communication device 450 corresponds to the first node in the present application.

As an embodiment, the second communication device 450 includes: a memory storing a computer-readable instruction program, the computer-readable instruction program generating actions when executed by at least one processor, the actions including: receiving a first signaling, the first signaling being used to determine a first time-frequency resource set, the first time-frequency resource set being associated with a first CG configuration, the first time-frequency resource set belonging to frequency domain resources of a first frequency band configuration in the frequency domain; receiving a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of: the relationship between the target frequency band configuration and the first frequency band configuration, or the first delay.

As a sub-embodiment of the above embodiment, the second communication device 450 corresponds to the first node in the present application.

As an embodiment, the first communication device 410 includes: at least one processor and at least one memory, the at least one memory including computer program code; the at least one memory and the computer program code are configured to be used with at least one processor. The first communication device 410 at least: transmits a first signaling, the first signaling being used to determine a first time-frequency resource set, the first time-frequency resource set being associated with a first CG configuration, the first time-frequency resource set belonging to frequency domain resources of a first frequency band configuration in the frequency domain; transmits a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of: the relationship between the target frequency band configuration and the first frequency band configuration, or the first delay.

As a sub-embodiment of the above embodiment, the first communication device 410 corresponds to the second node in the present application.

As an embodiment, the first communication device 410 includes: a memory storing a computer-readable instruction program, the computer-readable instruction program generating actions when executed by at least one processor, the actions including: transmitting a first signaling, the first signaling being used to determine a first time-frequency resource set, the first time-frequency resource set being associated with a first CG configuration, the first time-frequency resource set belonging to frequency domain resources of a first frequency band configuration in the frequency domain; transmitting a second signaling, the second signaling being later than the first signaling; wherein the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of: the relationship between the target frequency band configuration and the first frequency band configuration, or the first delay.

As a sub-embodiment of the above embodiment, the first communication device 410 corresponds to the second node in the present application.

### Embodiment 5

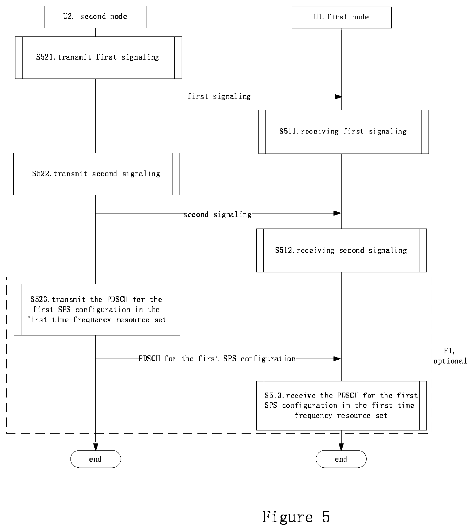

Embodiment 5 exemplifies a signal transmission flowchart according to an embodiment of the present application, as shown in Figure 5. In Figure 5, the first node U1 and the second node U2 communicate via an air interface. In particular, in Figure 5, the steps in the dashed box are optional.

The first node U1, in step S511, receives a first signaling; in step S512, receives a second signaling; and in step S513, receives a PDSCH for a first SPS configuration in a first time-frequency resource set.

The second node U2, in step S521, transmits the first signaling; in step S522, transmits the second signaling; and in step S523, transmits the PDSCH for the first SPS configuration in the first time-frequency resource set.

In Embodiment 5, the first signaling is used to determine the first time-frequency resource set, the first time-frequency resource set being associated with the first SPS configuration, the first time-frequency resource set belonging to frequency domain resources of a first frequency band configuration in the frequency domain; the second signaling is later than the first signaling; the second signaling is used to determine a target frequency band configuration, the target frequency band configuration being a frequency band configuration after a change in the frequency band configuration; the first time-frequency resource set is later than the second signaling in the time domain, and a first delay is equal to the time domain delay between the second signaling and the first time-frequency resource set; whether the first node U1 receives the PDSCH for the first SPS configuration in the first time-frequency resource set is related to at least one of: the relationship between the target frequency band configuration and the first frequency band configuration, or the first delay; when a first condition set is satisfied, the first node U1 receives the PDSCH for the first SPS configuration in the first time-frequency resource set; the first condition set includes a first condition, the first condition being that the target frequency band configuration is the same as the first frequency band configuration, or the first condition being that the first time-frequency resource set belongs to the intersection of the frequency domain resources in the target frequency band configuration and the frequency domain resources in the first frequency band configuration in the frequency domain; the first frequency band configuration is a BWP, and the target frequency band configuration is either the first frequency band configuration or a BWP other than the first frequency band configuration, or a first frequency band configuration set includes multiple frequency band configurations, all of which in the first frequency band configuration set are associated with the same BWP, the first frequency band configuration being one of the multiple frequency band configurations in the first frequency band configuration set, and the target frequency band configuration being one of the multiple frequency band configurations in the first frequency band configuration set.

As a sub-embodiment of Embodiment 5, the first condition set includes a second condition, the second condition being related to the relationship between the first delay and a first reference delay, the first reference delay being not less than the delay required to complete the change to the target frequency band configuration or being associated with the second signaling.

As an embodiment, the first node U1 is the first node in the present application.

As an embodiment, the second node U2 is the second node in the present application.

As an embodiment, the first node U1 is a UE.

As an embodiment, the first node U1 is a base station.

As an embodiment, the second node U2 is a base station.

As an embodiment, the second node U2 is a UE.

As an embodiment, the air interface between the second node U2 and the first node U1 is a Uu interface.

As an embodiment, the air interface between the second node U2 and the first node U1 includes a cellular link.

As an embodiment, the air interface between the second node U2 and the first node U1 is a PC5 interface.

As an embodiment, the air interface between the second node U2 and the first node U1 includes a sidelink.

As an embodiment, the air interface between the second node U2 and the first node U1 includes a wireless interface between a base station device and a user equipment.

As an embodiment, the air interface between the second node U2 and the first node U1 includes a wireless interface between a satellite device and a user equipment.

As an embodiment, the air interface between the second node U2 and the first node U1 includes a wireless interface between user equipment and user equipment.

As an embodiment, the first node U1 receiving a PDSCH means: the first node U1 receives a signal in this PDSCH.

As an embodiment, the first node U1 receiving a PDSCH means: the signal transmitted through this PDSCH is received by the first node U1.

As an embodiment, the first node U1 receiving a PDSCH means: the first node U1 receives at least one transport block in this PDSCH.

As an embodiment, the second node U2 transmitting a PDSCH means: the second node U2 transmits a signal in this PDSCH.

As an embodiment, the second node U2 transmitting a PDSCH means: the second node U2 transmits at least one transport block in this PDSCH.

As an embodiment, the first node U1 receives a first information block or transmits a first information block; the second node U2 transmits a first information block or receives a first information block; wherein the first information block is used to determine/indicate whether receiving a PDSCH for the first SPS configuration in the first time-frequency resource set is related to at least one of: the relationship between the target frequency band configuration and the first frequency band configuration, or the first delay.

As an embodiment, step 513 in the dashed box F1 exists.

As an embodiment, step 513 in the dashed box F1 does not exist.

As an embodiment, step 523 in the dashed box F1 exists.

As an embodiment, step 523 in the dashed box F1 does not exist.

### Embodiment 6

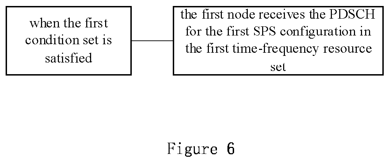

Embodiment 6 exemplifies a schematic diagram of the relationship between a first condition set and whether the first node receives a PDSCH for a first SPS configuration in a first time-frequency resource set according to an embodiment of the present application, as shown in Figure 6.

In Embodiment 6, when the first condition set is satisfied, the first node receives the PDSCH for the first SPS configuration in the first time-frequency resource set.

As an embodiment, the expression that the first condition set is satisfied means: all conditions in the first condition set are satisfied; the expression that the first condition set is not satisfied means: at least one condition in the first condition set is not satisfied.

As an embodiment, the expression that the first condition set is satisfied means: at least one condition in the first condition set is satisfied; the expression that the first condition set is not satisfied means: all conditions in the first condition set are not satisfied.

As an embodiment, the expression that the first condition set is satisfied means: each condition in the first condition set is satisfied; the expression that the first condition set is not satisfied means: at least one condition in the first condition set is not satisfied.

As an embodiment, the expression that the first condition set is satisfied means: at least one condition in the first condition set is satisfied; the expression that the first condition set is not satisfied means: each condition in the first condition set is not satisfied.

As an embodiment, the first condition set includes only one condition.

As an embodiment, the first condition set includes at least one condition.

As an embodiment, the first condition set includes multiple conditions.

As an embodiment, one condition in the first condition set is related to a configuration at the RRC layer.

As an embodiment, one condition in the first condition set is related to an SPS configuration.

As an embodiment, the expression that (the first node) receives a PDSCH for the first SPS configuration in the first time-frequency resource set includes: there is a downlink assignment for the first SPS configuration in the first time-frequency resource set.

As an embodiment, the first condition includes: the target frequency band configuration is the same as the first frequency band configuration.

As an embodiment, the first condition includes: the first time-frequency resource set belongs to the frequency domain resources in the target frequency band configuration in the frequency domain.

As an embodiment, the first condition includes: the first time-frequency resource set belongs to the intersection of the frequency domain resources in the target frequency band configuration and the frequency domain resources in the first frequency band configuration in the frequency domain.

As an embodiment, when the first condition set is not satisfied, the first node does not receive a PDSCH for the first SPS configuration in the first time-frequency resource set.

As an embodiment, the expression that (the first node) does not receive a PDSCH for the first SPS configuration in the first time-frequency resource set includes: there is no downlink assignment for the first SPS configuration in the first time-frequency resource set.

As an embodiment, when the first condition set is not satisfied, the first node does not receive a PDSCH for the first SPS configuration in the first time-frequency resource set or determines autonomously whether to receive a PDSCH for the first SPS configuration.

As an embodiment, the expression of autonomously determining whether to receive a PDSCH for the first SPS configuration includes: not being required to receive a PDSCH for the first SPS configuration.

As an embodiment, the expression of autonomously determining whether to receive a PDSCH for the first SPS configuration includes: being able to either receive or not receive a PDSCH for the first SPS configuration.

As an embodiment, when the first condition set is not satisfied, the first node receives a PDSCH for the first SPS configuration in the first time-frequency resource set; when the first condition set is satisfied, the first node does not receive a PDSCH for the first SPS configuration in the first time-frequency resource set.

As an embodiment, when the first condition set is not satisfied, the first node receives a PDSCH for the first SPS configuration in the first time-frequency resource set; when the first condition set is satisfied, the first node does not receive a PDSCH for the first SPS configuration in the first time-frequency resource set, or determines autonomously whether to receive a PDSCH for the first SPS configuration.

### Embodiment 7

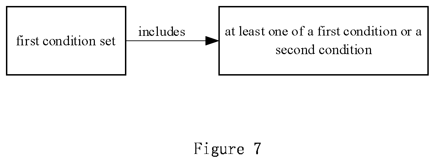

Embodiment 7 exemplifies a schematic diagram explaining a first condition set according to an embodiment of the present application, as shown in Figure 7.

In Embodiment 7, the first condition set includes at least one of a first condition or a second condition.

As an embodiment, the first condition set includes the first condition.

As an embodiment, the first condition set includes the second condition.

As an embodiment, the first condition set includes only the first condition.

As an embodiment, the first condition set includes only the second condition.

As an embodiment, the first condition set includes at least the first condition and the second condition.

As an embodiment, when the first condition is satisfied, the first node receives a PDSCH for the first SPS configuration in the first time-frequency resource set.

As an embodiment, when the first condition is not satisfied, the first node does not receive a PDSCH for the first SPS configuration in the first time-frequency resource set.

As an embodiment, when both the first condition and the second condition are satisfied, the first node receives a PDSCH for the first SPS configuration in the first time-frequency resource set.

As an embodiment, when the first condition is satisfied but the second condition is not satisfied, the first node does not receive a PDSCH for the first SPS configuration in the first time-frequency resource set.

As an embodiment, when the first condition is satisfied but the second condition is not satisfied, the first node autonomously determines whether to receive a PDSCH for the first SPS configuration.

As an embodiment, the second condition is related to the delay of a change in frequency domain resources.

As an embodiment, the second condition is related to the delay of a change in frequency band configuration.

As an embodiment, the second condition is related to the magnitude relationship between the first delay and a first reference delay.

As an embodiment, the second condition includes: the first delay is not less than the first reference delay.

As an embodiment, the second condition includes: the first delay is greater than the first reference delay.

As an embodiment, the second condition includes: the first delay is not greater than the first reference delay.

As an embodiment, the second condition includes: the first delay is less than the first reference delay.

As an embodiment, the second condition includes: the first delay is less than the sum of the first reference delay and the length of K time slots.

As an embodiment, the second condition includes: the first delay is not less than the sum of the first reference delay and the length of K time slots.

As an embodiment, the second condition includes: the first delay is greater than the sum of the first reference delay and the length of K time slots.

As an embodiment, the second condition includes: the first delay is not greater than the sum of the first reference delay and the length of K time slots.

As an embodiment, the second condition includes: the first delay is less than the sum of the first reference delay and the length of K symbols.

As an embodiment, the second condition includes: the first delay is not less than the sum of the first reference delay and the length of K symbols.

As an embodiment, the second condition includes: the first delay is greater than the sum of the first reference delay and the length of K symbols.

As an embodiment, the second condition includes: the first delay is not greater than the sum of the first reference delay and the length of K symbols.

As an embodiment, the K is a positive integer.

As an embodiment, the K is configurable.

As an embodiment, the K is a constant.

As an embodiment, the K is equal to 1.

As an embodiment, the K is equal to 2.

As an embodiment, the K is equal to 3.

As an embodiment, the K is equal to 4.

As an embodiment, the K is equal to 5.

As an embodiment, the K is equal to 6.

As an embodiment, the K is equal to 7.

As an embodiment, the K is not greater than 16.

As an embodiment, the K is not greater than 28.

As an embodiment, the K is not greater than 16 multiplied by 14.

As an embodiment, the K is not greater than 16 multiplied by 12.

As an embodiment, the K is not greater than 32 multiplied by 14.

As an embodiment, the K is not greater than 32 multiplied by 12.

As an embodiment, the first reference delay is associated with BWP transformation.

As an embodiment, the first reference delay is associated with BWP switch delay.

As an embodiment, the first reference delay is equal to the BWP switch delay.

As an embodiment, the first reference delay is equal to the sum of the BWP switch delay and the length of one time slot.

As an embodiment, the first reference delay is equal to the sum of the BWP switch delay and the length of two time slots.

As an embodiment, the first reference delay is equal to the sum of the BWP switch delay and the length of a positive integer number of time slots.

As an embodiment, the first reference delay is the delay of BWP switching.

As an embodiment, the first reference delay is not less than the delay required to complete the change to the target frequency band configuration.

As an embodiment, the first reference delay is not less than the delay required to complete the change from a frequency band configuration other than the target frequency band configuration to the target frequency band configuration.

As an embodiment, the first reference delay is the delay required to complete the change to the target frequency band configuration.

As an embodiment, the first reference delay is the delay required to complete the change from a frequency band configuration other than the target frequency band configuration to the target frequency band configuration.

As an embodiment, the first reference delay is not less than the delay required to complete the activated BWP switching.

As an embodiment, the second reference delay is not less than the duration occupied by three consecutive subframes.

As an embodiment, the first reference delay is not less than the duration occupied by three consecutive subframes plus the delay required to complete the activated BWP switching.

As an embodiment, the first reference delay is not less than the greater of the duration occupied by three consecutive subframes and the delay required to complete the activated BWP switching.

As an embodiment, the first reference delay is not less than the duration occupied by three consecutive subframes plus the delay required to complete the change from a frequency band configuration other than the target frequency band configuration to the target frequency band configuration.

As an embodiment, the first reference delay is not less than the greater of the duration occupied by three consecutive subframes and the delay required to complete the change from a frequency band configuration other than the target frequency band configuration to the target frequency band configuration.

As an embodiment, after changing to the target frequency band configuration, the target frequency band configuration is an activated BWP.

As an embodiment, after changing to the target frequency band configuration, the target frequency band configuration takes effect.

As an embodiment, the first reference delay is related to user equipment capability (UE capability).

As an embodiment, the first reference delay is measured in units of time slots.

As an embodiment, the first reference delay is measured in units of symbols.

As an embodiment, the first reference delay is measured in units of milliseconds.

As an embodiment, the first reference delay is measured in units of subframes.

As an embodiment, the first reference delay is equal to the duration occupied by a positive integer number of time slots.

As an embodiment, the first reference delay is equal to the duration occupied by a positive integer number of symbols.

As an embodiment, the first reference delay is equal to the duration occupied by a positive integer number of milliseconds.

As an embodiment, the first reference delay is equal to the duration occupied by a positive integer number of subframes.

As an embodiment, the first reference delay is equal to the number of a positive integer number of time slots.

As an embodiment, the first reference delay is equal to the number of a positive integer number of symbols.

As an embodiment, the first reference delay is equal to a positive integer number of milliseconds.

As an embodiment, the first reference delay is equal to the number of a positive integer number of subframes.

As an embodiment, the first reference delay is related to changes in available bandwidth/RB.

As an embodiment, the first reference delay is not less than the delay required for a change in available bandwidth.

As an embodiment, the first reference delay is not less than the delay required for a change in available RB.

As an embodiment, the first reference delay is associated with the second signaling.

As an embodiment, the first reference delay is determined by the second signaling.

As an embodiment, the first reference delay is indicated by the second signaling.

As an embodiment, the first reference delay is equal to the duration from the start of the time slot to which the second signaling belongs in the time domain to the start of a time slot indicated by the second signaling.

As an embodiment, the first reference delay is equal to the duration from the start of the time slot to which the second signaling belongs in the time domain to the end of a time slot indicated by the second signaling.

As an embodiment, the first reference delay is equal to the duration from the end of the time slot to which the second signaling belongs in the time domain to the start of a time slot indicated by the second signaling.

As an embodiment, the first reference delay is equal to the duration from the end of the time slot to which the second signaling belongs in the time domain to the end of a time slot indicated by the second signaling.

As an embodiment, the first reference delay is not less than the duration from the start of the time slot to which the second signaling belongs in the time domain to the start of a time slot indicated by the second signaling.

As an embodiment, the first reference delay is not less than the duration from the start of the time slot to which the second signaling belongs in the time domain to the end of a time slot indicated by the second signaling.

As an embodiment, the first reference delay is not less than the duration from the end of the time slot to which the second signaling belongs in the time domain to the start of a time slot indicated by the second signaling.

As an embodiment, the first reference delay is not less than the duration from the end of the time slot to which the second signaling belongs in the time domain to the end of a time slot indicated by the second signaling.

As an embodiment, the first reference delay is equal to the duration from the end of the third symbol of the time slot to which the second signaling belongs in the time domain to the start of a time slot indicated by the second signaling.

As an embodiment, the first reference delay is not less than the duration from the end of the third symbol of the time slot to which the second signaling belongs in the time domain to the start of a time slot indicated by the second signaling.

As an embodiment, the second condition includes: when the target frequency band configuration takes effect, a characteristic signaling is received, and the time delay in the time domain between this characteristic signaling and the first time-frequency resource set is not less than a second reference delay.

As an embodiment, the characteristic signaling is signaling used for the reactivation of the first SPS configuration.

As an embodiment, the characteristic signaling is signaling used for resuming the suspended first SPS configuration.

As an embodiment, the characteristic signaling is signaling used for the reactivation of the first CG configuration.

As an embodiment, the characteristic signaling is signaling used for resuming the suspended first CG configuration.

As an embodiment, the CRC corresponding to the characteristic signaling is scrambled by CS-RNTI, and the value of the NDI (New Data Indicator) field in the first signaling is equal to 0.

As an embodiment, the characteristic signaling is a DCI signaling.

As an embodiment, the characteristic signaling is a DCI format.

As an embodiment, the characteristic signaling is a physical layer signaling.

As an embodiment, the characteristic signaling is a MAC CE.

As an embodiment, the time delay in the time domain between a characteristic signaling and the first time-frequency resource set refers to the time difference in the time domain between this characteristic signaling and the first time-frequency resource set.

As an embodiment, the time delay in the time domain between a characteristic signaling and the first time-frequency resource set refers to the time difference between the time slot to which the characteristic signaling belongs in the time domain and the time slot to which the first time-frequency resource set belongs in the time domain.

As an embodiment, the time delay in the time domain between a characteristic signaling and the first time-frequency resource set refers to the time difference between the time slot to which the characteristic signaling belongs in the time domain and the earliest time slot occupied by the first time-frequency resource set.

As an embodiment, the time delay in the time domain between a characteristic signaling and the first time-frequency resource set is associated with the time slot to which the characteristic signaling belongs in the time domain and the time slot to which the first time-frequency resource set belongs in the time domain.

As an embodiment, the time delay in the time domain between a characteristic signaling and the first time-frequency resource set is associated with the time slot to which the characteristic signaling belongs in the time domain and at least one time slot occupied by the first time-frequency resource set in the time domain.

As an embodiment, the time delay in the time domain between a characteristic signaling and the first time-frequency resource set is not less than the duration from the start of the first time slot following the time slot to which the characteristic signaling belongs in the time domain to the start of the time slot to which the first time-frequency resource set belongs in the time domain.

As an embodiment, the time delay in the time domain between a characteristic signaling and the first time-frequency resource set is not less than the duration from the start of the first time slot following the time slot to which the characteristic signaling belongs in the time domain to the start of the earliest time slot occupied by the first time-frequency resource set in the time domain.

As an embodiment, the time delay in the time domain between a characteristic signaling and the first time-frequency resource set is not less than the duration from the start of the time slot to which the characteristic signaling belongs in the time domain to the start of the time slot to which the first time-frequency resource set belongs in the time domain.

As an embodiment, the time delay in the time domain between a characteristic signaling and the first time-frequency resource set is not less than the duration from the start of the time slot to which the characteristic signaling belongs in the time domain to the start of the earliest time slot occupied by the first time-frequency resource set in the time domain.

As an embodiment, the time delay in the time domain between a characteristic signaling and the first time-frequency resource set is not less than the duration from the end of the time slot to which the characteristic signaling belongs in the time domain to the start of the earliest time slot occupied by the first time-frequency resource set in the time domain.

As an embodiment, the time delay in the time domain between a characteristic signaling and the first time-frequency resource set refers to the number of time slots between the time slot to which the characteristic signaling belongs in the time domain and the time slot to which the first time-frequency resource set belongs in the time domain.

As an embodiment, the time delay in the time domain between a characteristic signaling and the first time-frequency resource set refers to the number of time slots between the time slot to which the characteristic signaling belongs in the time domain and the earliest time slot occupied by the first time-frequency resource set in the time domain.

As an embodiment, the time delay in the time domain between a characteristic signaling and the first time-frequency resource set refers to the number of time slots from the time slot to which the characteristic signaling belongs in the time domain to the time slot preceding the time slot to which the first time-frequency resource set belongs in the time domain.

As an embodiment, the time delay in the time domain between a characteristic signaling and the first time-frequency resource set refers to the number of time slots from the time slot to which the characteristic signaling belongs in the time domain to the time slot preceding the earliest time slot occupied by the first time-frequency resource set in the time domain.

As an embodiment, the time delay in the time domain between a characteristic signaling and the first time-frequency resource set refers to the duration from the start of the time slot to which the characteristic signaling belongs in the time domain to the start of the time slot to which the first time-frequency resource set belongs in the time domain.

As an embodiment, the time delay in the time domain between a characteristic signaling and the first time-frequency resource set refers to the duration from the start of the time slot to which the characteristic signaling belongs in the time domain to the start of the earliest time slot occupied by the first time-frequency resource set in the time domain.

As an embodiment, the time delay in the time domain between a characteristic signaling and the first time-frequency resource set refers to the number of time slots from the first time slot following the time slot to which the characteristic signaling belongs in the time domain to the time slot preceding the time slot to which the first time-frequency resource set belongs in the time domain.

As an embodiment, the time delay in the time domain between a characteristic signaling and the first time-frequency resource set refers to the number of time slots from the first time slot following the time slot to which the characteristic signaling belongs in the time domain to the time slot preceding the earliest time slot occupied by the first time-frequency resource set in the time domain.

As an embodiment, the time delay in the time domain between a characteristic signaling and the first time-frequency resource set refers to the duration from the start of the first time slot following the time slot to which the characteristic signaling belongs in the time domain to the start of the time slot to which the first time-frequency resource set belongs in the time domain.

As an embodiment, the time delay in the time domain between a characteristic signaling and the first time-frequency resource set refers to the duration from the start of the first time slot following the time slot to which the characteristic signaling belongs in the time domain to the start of the earliest time slot occupied by the first time-frequency resource set in the time domain.

As an embodiment, the time delay in the time domain between a characteristic signaling and the first time-frequency resource set refers to the number of time slots from the time slot to which the characteristic signaling belongs in the time domain to the time slot to which the first time-frequency resource set belongs in the time domain.

As an embodiment, the time delay in the time domain between a characteristic signaling and the first time-frequency resource set refers to the number of time slots from the time slot to which the characteristic signaling belongs in the time domain to the earliest time slot occupied by the first time-frequency resource set in the time domain.

As an embodiment, the time delay in the time domain between a characteristic signaling and the first time-frequency resource set refers to the duration from the start of the time slot to which the characteristic signaling belongs in the time domain to the end of the time slot to which the first time-frequency resource set belongs in the time domain.

As an embodiment, the time delay in the time domain between a characteristic signaling and the first time-frequency resource set refers to the duration from the start of the time slot to which the characteristic signaling belongs in the time domain to the end of the earliest time slot occupied by the first time-frequency resource set in the time domain.

As an embodiment, the time delay in the time domain between a characteristic signaling and the first time-frequency resource set refers to the number of time slots from the first time slot following the time slot to which the characteristic signaling belongs in the time domain to the time slot to which the first time-frequency resource set belongs in the time domain.

As an embodiment, the time delay in the time domain between a characteristic signaling and the first time-frequency resource set refers to the number of time slots from the first time slot following the time slot to which the characteristic signaling belongs in the time domain to the earliest time slot occupied by the first time-frequency resource set in the time domain.

As an embodiment, the time delay in the time domain between a characteristic signaling and the first time-frequency resource set refers to the duration from the start of the first time slot following the time slot to which the characteristic signaling belongs in the time domain to the end of the time slot to which the first time-frequency resource set belongs in the time domain.

As an embodiment, the time delay in the time domain between a characteristic signaling and the first time-frequency resource set refers to the duration from the start of the first time slot following the time slot to which the characteristic signaling belongs in the time domain to the end of the earliest time slot occupied by the first time-frequency resource set in the time domain.

As an embodiment, the time delay in the time domain between a characteristic signaling and the first time-frequency resource set refers to the duration from the start of the first symbol following the last symbol occupied by the characteristic signaling in the time domain to the start of the earliest symbol occupied by the first time-frequency resource set in the time domain.

As an embodiment, the time delay in the time domain between a characteristic signaling and the first time-frequency resource set refers to the number of symbols from the first symbol following the last symbol occupied by the characteristic signaling in the time domain to the symbol preceding the earliest symbol occupied by the first time-frequency resource set in the time domain.

As an embodiment, the time delay in the time domain between a characteristic signaling and the first time-frequency resource set refers to the duration from the start of the last symbol occupied by the characteristic signaling in the time domain to the start of the earliest symbol occupied by the first time-frequency resource set in the time domain.

As an embodiment, the time delay in the time domain between a characteristic signaling and the first time-frequency resource set refers to the number of symbols from the last symbol occupied by the characteristic signaling in the time domain to the symbol preceding the earliest symbol occupied by the first time-frequency resource set in the time domain.

As an embodiment, the time delay in the time domain between a characteristic signaling and the first time-frequency resource set refers to the duration from the end of the last symbol occupied by the characteristic signaling in the time domain to the start of the earliest symbol occupied by the first time-frequency resource set in the time domain.

As an embodiment, the time delay in the time domain between a characteristic signaling and the first time-frequency resource set refers to the number of symbols from the end of the last symbol occupied by the characteristic signaling in the time domain to the symbol preceding the earliest symbol occupied by the first time-frequency resource set in the time domain.

As an embodiment, the time delay in the time domain between a characteristic signaling and the first time-frequency resource set refers to the number of time slots from the time slot in which the PUCCH carrying the HARQ-ACK bits generated for the PDSCH providing the characteristic signaling is transmitted to the time slot preceding the earliest time slot occupied by the first time-frequency resource set in the time domain.

As an embodiment, the time delay in the time domain between a characteristic signaling and the first time-frequency resource set refers to the duration from the start of the time slot in which the PUCCH carrying the HARQ-ACK bits generated for the PDSCH providing the characteristic signaling is transmitted to the start of the earliest time slot occupied by the first time-frequency resource set in the time domain.

As an embodiment, the time delay in the time domain between a characteristic signaling and the first time-frequency resource set refers to the number of time slots from the first time slot following the time slot in which the PUCCH carrying the HARQ-ACK bits generated for the PDSCH providing the characteristic signaling is transmitted to the time slot preceding the earliest time slot occupied by the first time-frequency resource set in the time domain.

As an embodiment, the time delay in the time domain between a characteristic signaling and the first time-frequency resource set refers to the duration from the start of the first time slot following the time slot in which the PUCCH carrying the HARQ-ACK bits generated for the PDSCH providing the characteristic signaling is transmitted to the start of the earliest time slot occupied by the first time-frequency resource set in the time domain.

As an embodiment, the second reference delay is configurable.

As an embodiment, the second reference delay is related to user equipment capability (UE capability).

As an embodiment, the second reference delay is related to the decoding time of the characteristic signaling.

As an embodiment, the second reference delay is related to the processing delay of the characteristic signaling.

As an embodiment, the second reference delay is not less than the processing delay of the characteristic signaling.

As an embodiment, the second reference delay is not less than the PUSCH preparation time.

As an embodiment, the second reference delay is not less than the duration occupied by three consecutive subframes.

As an embodiment, the second reference delay is related to the subcarrier spacing.

As an embodiment, the second reference delay is measured in units of time slots.

As an embodiment, the second reference delay is measured in units of symbols.

As an embodiment, the second reference delay is measured in units of milliseconds.

As an embodiment, the second reference delay is measured in units of subframes.

As an embodiment, the second reference delay is equal to the duration occupied by a positive integer number of time slots.

As an embodiment, the second reference delay is equal to the duration occupied by a positive integer number of symbols.

As an embodiment, the second reference delay is equal to the duration occupied by a positive integer number of milliseconds.

As an embodiment, the second reference delay is equal to the duration occupied by a positive integer number of subframes.

As an embodiment, the second reference delay is equal to the number of a positive integer number of time slots.

As an embodiment, the second reference delay is equal to the number of a positive integer number of symbols.

As an embodiment, the second reference delay is equal to a positive integer number of milliseconds.

As an embodiment, the second reference delay is equal to the number of a positive integer number of subframes.

As an embodiment, all bits in the frequency domain resource allocation field of the characteristic signaling are set to 0.

As an embodiment, all bits in the frequency domain resource allocation field of the characteristic signaling are set to 1.

As an embodiment, all bits in the time domain resource allocation field of the characteristic signaling are set to 0.

As an embodiment, all bits in the time domain resource allocation field of the characteristic signaling are set to 1.

### Embodiment 8

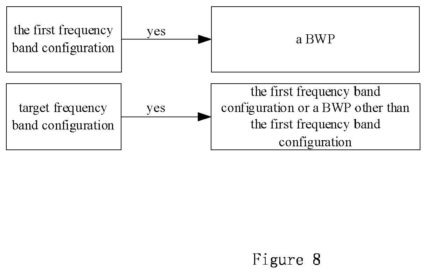

Embodiment 8 illustrates a schematic diagram of the first frequency band configuration and the target frequency band configuration according to an embodiment of the present application, as shown in Figure 8.

In Embodiment 8, the first frequency band configuration is a BWP, and the target frequency band configuration is the first frequency band configuration or a BWP other than the first frequency band configuration.

As an embodiment, the first frequency band configuration is an active downlink BWP (active DL BWP).

As an embodiment, the target frequency band configuration is the first frequency band configuration or a downlink BWP other than the first frequency band configuration.

### Embodiment 9

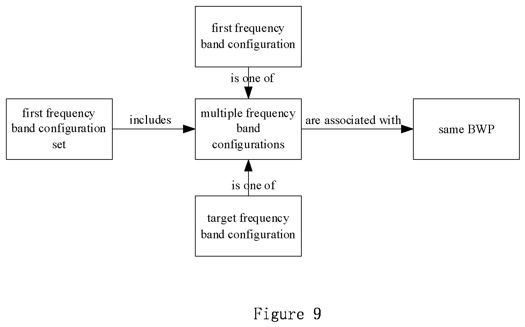

Embodiment 9 illustrates a schematic diagram of the relationship between a first frequency band configuration set, multiple frequency band configurations, a first frequency band configuration, and a target frequency band configuration according to an embodiment of the present application, as shown in Figure 9.

In Embodiment 9, the first frequency band configuration set includes multiple frequency band configurations, and the multiple frequency band configurations in the first frequency band configuration set are all associated with the same BWP. The first frequency band configuration is one of the multiple frequency band configurations in the first frequency band configuration set; the target frequency band configuration is one of the multiple frequency band configurations in the first frequency band configuration set.

As an embodiment, the first frequency band configuration set is configured by RRC layer signaling.

As an embodiment, the first frequency band configuration set is configured by higher layer signaling.

As an embodiment, the multiple frequency band configurations in the first frequency band configuration set are all associated with the same active BWP.

As an embodiment, the multiple frequency band configurations in the first frequency band configuration set are all associated with the same active downlink BWP (active DL BWP).

As an embodiment, the multiple frequency band configurations in the first frequency band configuration set are all configured for the same BWP.

As an embodiment, the multiple frequency band configurations in the first frequency band configuration set are all associated with the same BWP; from the frequency domain perspective, each of the multiple frequency band configurations in the first frequency band configuration set includes at least part of the frequency domain resources of the same BWP.

As an embodiment, the multiple frequency band configurations in the first frequency band configuration set are all associated with the same BWP; from the frequency domain perspective, the multiple frequency band configurations in the first frequency band configuration set respectively include different frequency domain resources of the same BWP.

As an embodiment, the multiple frequency band configurations in the first frequency band configuration set all include RB configurations.

### Embodiment 10

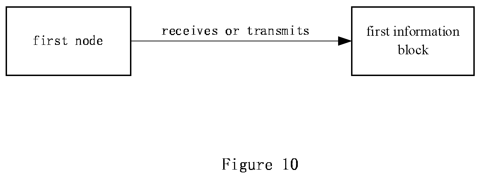

Embodiment 10 illustrates a schematic diagram related to the first information block according to an embodiment of the present application, as shown in Figure 10.

In Embodiment 10, the first node in the present application receives the first information block or transmits the first information block.

As an embodiment, the first information block is received/transmitted before the reception of the first signaling.

As an embodiment, the first information block is used to determine whether receiving the PDSCH for the first SPS configuration in the first time-frequency resource set is related to at least one of the relationship between the target frequency band configuration and the first frequency band configuration or the first delay.

As an embodiment, the first information block is used to indicate whether receiving the PDSCH for the first SPS configuration in the first time-frequency resource set is related to at least one of the relationship between the target frequency band configuration and the first frequency band configuration or the first delay.

As an embodiment, the first information block includes physical layer signaling.

As an embodiment, the first information block includes DCI (Downlink Control Information).

As an embodiment, the first information block includes higher layer signaling.

As an embodiment, the first information block includes MAC CE (Medium Access Control layer Control Element).

As an embodiment, the first information block includes RRC (Radio Resource Control) signaling.

As an embodiment, the first information block includes at least one field in at least one IE (Information Element).

As an embodiment, the first information block is a field in a DCI format.

As an embodiment, the first information block is a MAC CE.

As an embodiment, the first information block is a field in a MAC CE.

As an embodiment, the first information block is an IE (Information Element).

As an embodiment, the first information block is a field in an IE.

As an embodiment, the first information block is a higher layer parameter.

As an embodiment, the name of the first information block includes "off".

As an embodiment, the name of the first information block includes "on".

As an embodiment, the name of the first information block includes "cell" and "off".

As an embodiment, the name of the first information block includes "cell" and "on".

As an embodiment, the name of the first information block includes "cell", "on", and "off".

As an embodiment, the name of the first information block includes "BWP".

As an embodiment, the name of the first information block includes "BWP" and "off".

As an embodiment, the name of the first information block includes "BWP" and "on".

As an embodiment, the name of the first information block includes "BWP", "on", and "off".

As an embodiment, the name of the first information block includes "symbol", and the name of the first information block includes at least one of "on" or "off".

As an embodiment, the name of the first information block includes "slot", and the name of the first information block includes at least one of "on" or "off".

As an embodiment, the name of the first information block includes "subframe", and the name of the first information block includes at least one of "on" or "off".

As an embodiment, the name of the first information block includes "duration", and the name of the first information block includes at least one of "on" or "off".

As an embodiment, the name of the first information block includes "time", and the name of the first information block includes at least one of "on" or "off".

As an embodiment, the name of the first information block includes "energy", and the name of the first information block includes at least one of "on" or "off".

As an embodiment, the name of the first information block includes "sav" (likely shorthand for "save"), and the name of the first information block includes at least one of "on" or "off".

As an embodiment, the name of the first information block includes "power", and the name of the first information block includes at least one of "on" or "off".

As an embodiment, the name of the first information block includes "network", and the name of the first information block includes at least one of "on" or "off".

As an embodiment, the name of the first information block includes "activ" (likely shorthand for "active" or "activation").

As an embodiment, the name of the first information block includes "deactiv" (likely shorthand for "deactive" or "deactivation").

As an embodiment, the name of the first information block includes "cell", and the name of the first information block includes at least one of "activ" or "deactiv".

As an embodiment, the name of the first information block includes "BWP", and the name of the first information block includes at least one of "activ" or "deactiv".

As an embodiment, the name of the first information block includes "symbol", and the name of the first information block includes at least one of "activ" or "deactiv".

As an embodiment, the name of the first information block includes "slot", and the name of the first information block includes at least one of "activ" or "deactiv".

As an embodiment, the name of the first information block includes "subframe", and the name of the first information block includes at least one of "activ" or "deactiv".

As an embodiment, the name of the first information block includes "duration", and the name of the first information block includes at least one of "activ" or "deactiv".

As an embodiment, the name of the first information block includes "time", and the name of the first information block includes at least one of "activ" or "deactiv".

As an embodiment, the name of the first information block includes "activated", "active", "activating", or "activation".

As an embodiment, the name of the first information block includes "deactivated", "inactive", "deactivating", or "deactivation".

As an embodiment, the name of the first information block includes "cell", and the name of the first information block includes at least one of "activated", "active", "activating", "activation", "deactivated", "inactive", "deactivating", or "deactivation".

As an embodiment, the name of the first information block includes "BWP", and the name of the first information block includes at least one of "activated", "active", "activating", "activation", "deactivated", "inactive", "deactivating", or "deactivation".

As an embodiment, the name of the first information block includes "symbol", and the name of the first information block includes at least one of "activated", "active", "activating", "activation", "deactivated", "inactive", "deactivating", or "deactivation".

As an embodiment, the name of the first information block includes "slot", and the name of the first information block includes at least one of "activated", "active", "activating", "activation", "deactivated", "inactive", "deactivating", or "deactivation".

As an embodiment, the name of the first information block includes "subframe", and the name of the first information block includes at least one of "activated", "active", "activating", "activation", "deactivated", "inactive", "deactivating", or "deactivation".

As an embodiment, the name of the first information block includes "duration", and the name of the first information block includes at least one of "activated", "active", "activating", "activation", "deactivated", "inactive", "deactivating", or "deactivation".

As an embodiment, the name of the first information block includes "time", and the name of the first information block includes at least one of "activated", "active", "activating", "activation", "deactivated", "inactive", "deactivating", or "deactivation".

As an embodiment, the name of the first information block includes "silent".

As an embodiment, the name of the first information block includes "silence".

As an embodiment, the name of the first information block includes "cell", and the name of the first information block includes "silent" or "silence".

As an embodiment, the name of the first information block includes "BWP", and the name of the first information block includes "silent" or "silence".

As an embodiment, the name of the first information block includes "symbol", and the name of the first information block includes "silent" or "silence".

As an embodiment, the name of the first information block includes "slot", and the name of the first information block includes "silent" or "silence".

As an embodiment, the name of the first information block includes "subframe", and the name of the first information block includes "silent" or "silence".

As an embodiment, the name of the first information block includes "duration", and the name of the first information block includes "silent" or "silence".

As an embodiment, the name of the first information block includes "time", and the name of the first information block includes "silent" or "silence".

As an embodiment, the name of the first information block includes "dormant".

As an embodiment, the name of the first information block includes "dormancy".

As an embodiment, the name of the first information block includes "cell", and the name of the first information block includes "dormant" or "dormancy".

As an embodiment, the name of the first information block includes "BWP", and the name of the first information block includes "dormant" or "dormancy".

As an embodiment, the name of the first information block includes "symbol", and the name of the first information block includes "dormant" or "dormancy".

As an embodiment, the name of the first information block includes "slot", and the name of the first information block includes "dormant" or "dormancy".

As an embodiment, the name of the first information block includes "subframe", and the name of the first information block includes "dormant" or "dormancy".

As an embodiment, the name of the first information block includes "duration", and the name of the first information block includes "dormant" or "dormancy".

As an embodiment, the name of the first information block includes "time", and the name of the first information block includes "dormant" or "dormancy".

As an embodiment, the name of the first information block includes "enabl" (likely shorthand for "enable" or "enabled").

As an embodiment, the name of the first information block includes "disabl" (likely shorthand for "disable" or "disabled").

As an embodiment, the name of the first information block includes "cell" and at least one of "enabl" or "disabl."

As an embodiment, the name of the first information block includes "BWP" and at least one of "enabl" or "disabl."

As an embodiment, the name of the first information block includes "symbol" and at least one of "enabl" or "disabl."

As an embodiment, the name of the first information block includes "slot" and at least one of "enabl" or "disabl."

As an embodiment, the name of the first information block includes "subframe" and at least one of "enabl" or "disabl."

As an embodiment, the name of the first information block includes "duration" and at least one of "enabl" or "disabl."

As an embodiment, the name of the first information block includes "time" and at least one of "enabl" or "disabl."

As an embodiment, the name of the first information block includes "enabling" or "enabled."

As an embodiment, the name of the first information block includes "disabling" or "disabled."

As an embodiment, the name of the first information block includes "cell" and at least one of "enabling," "enabled," "disabling," or "disabled."

As an embodiment, the name of the first information block includes "BWP" and at least one of "enabling," "enabled," "disabling," or "disabled."

As an embodiment, the name of the first information block includes "symbol" and at least one of "enabling," "enabled," "disabling," or "disabled."

As an embodiment, the name of the first information block includes "slot" and at least one of "enabling," "enabled," "disabling," or "disabled."

As an embodiment, the name of the first information block includes "subframe" and at least one of "enabling," "enabled," "disabling," or "disabled."

As an embodiment, the name of the first information block includes "duration" and at least one of "enabling," "enabled," "disabling," or "disabled."

As an embodiment, the name of the first information block includes "time" and at least one of "enabling," "enabled," "disabling," or "disabled."

As an embodiment, the name of the first information block includes "mute."

As an embodiment, the name of the first information block includes "muting."

As an embodiment, the name of the first information block includes "muted."

As an embodiment, the name of the first information block includes "cell" and at least one of "mute," "muting," or "muted."

As an embodiment, the name of the first information block includes "BWP" and at least one of "mute," "muting," or "muted."

As an embodiment, the name of the first information block includes "symbol" and at least one of "mute," "muting," or "muted."

As an embodiment, the name of the first information block includes "slot" and at least one of "mute," "muting," or "muted."

As an embodiment, the name of the first information block includes "subframe" and at least one of "mute," "muting," or "muted."

As an embodiment, the name of the first information block includes "duration" and at least one of "mute," "muting," or "muted."

As an embodiment, the name of the first information block includes "time" and at least one of "mute," "muting," or "muted."

As an embodiment, the name of the first information block includes "energy."

As an embodiment, the name of the first information block includes "saving."

As an embodiment, the name of the first information block includes "network."

As an embodiment, the name of the first information block includes "power."

As an embodiment, the name of the first information block includes "puncture."

As an embodiment, the name of the first information block includes "punctured."

As an embodiment, the name of the first information block includes "puncturing."

As an embodiment, the name of the first information block includes "cell" and at least one of "puncture," "punctured," or "puncturing."

As an embodiment, the name of the first information block includes "BWP" and at least one of "puncture," "punctured," or "puncturing."

As an embodiment, the name of the first information block includes "symbol" and at least one of "puncture," "punctured," or "puncturing."

As an embodiment, the name of the first information block includes "slot" and at least one of "puncture," "punctured," or "puncturing."

As an embodiment, the name of the first information block includes "subframe" and at least one of "puncture," "punctured," or "puncturing."

As an embodiment, the name of the first information block includes "duration" and at least one of "puncture," "punctured," or "puncturing."

As an embodiment, the name of the first information block includes "time" and at least one of "puncture," "punctured," or "puncturing."

As an embodiment, the name of the first information block includes "sleep."

As an embodiment, the name of the first information block includes "cell" and "sleep."

As an embodiment, the name of the first information block includes "BWP" and "sleep."

As an embodiment, the name of the first information block includes "symbol" and "sleep."

As an embodiment, the name of the first information block includes "slot" and "sleep."

As an embodiment, the name of the first information block includes "subframe" and "sleep."

As an embodiment, the name of the first information block includes "duration" and "sleep."

As an embodiment, the name of the first information block includes "time" and "sleep."

As an embodiment, the name of the first information block includes "suspend."

As an embodiment, the name of the first information block includes "cell" and "suspend."

As an embodiment, the name of the first information block includes "BWP" and "suspend."

As an embodiment, the name of the first information block includes "symbol" and "suspend."

As an embodiment, the name of the first information block includes "slot" and "suspend."

As an embodiment, the name of the first information block includes "subframe" and "suspend."

As an embodiment, the name of the first information block includes "duration" and "suspend."

As an embodiment, the name of the first information block includes "time" and "suspend."

As an embodiment, the name of the first information block includes "switch."

As an embodiment, the name of the first information block includes "BWP" and "switch."

As an embodiment, the name of the first information block includes "band" and "switch."

As an embodiment, the name of the first information block includes "frequency."

As an embodiment, the name of the first information block includes "change."

As an embodiment, the name of the first information block includes "BWP" and "change."

As an embodiment, the name of the first information block includes "band" and "change."

As an embodiment, the name of the first information block includes "SPS."

As an embodiment, the name of the first information block includes "SPS" and "BWP."

As an embodiment, the name of the first information block includes "SPS" and "frequency."

As an embodiment, the name of the first information block includes "SPS" and "band."

As an embodiment, the first information block is used to determine at least one of the relationship between the target frequency band configuration and the first frequency band configuration or the first delay, which is used to determine whether to receive the PDSCH for the first SPS configuration in the first time-frequency resource set.

As an embodiment, the first information block is used to indicate at least one of the relationship between the target frequency band configuration and the first frequency band configuration or the first delay, which is used to determine whether to receive the PDSCH for the first SPS configuration in the first time-frequency resource set.

As an embodiment, the first information block is used to determine the operation of enabling the reactivation of the SPS configuration when the frequency band configuration changes.

As an embodiment, the first information block is used to determine the operation of enabling the resumption of a suspended SPS configuration when the frequency band configuration changes.

As an embodiment, the first information block is used to indicate the operation of enabling the reactivation of the SPS configuration when the frequency band configuration changes.

As an embodiment, the first information block is used to indicate the operation of enabling the resumption of a suspended SPS configuration when the frequency band configuration changes.

As an embodiment, the first information block implicitly indicates the operation of enabling the reactivation of the SPS configuration when the frequency band configuration changes.

As an embodiment, the first information block implicitly indicates the operation of enabling the resumption of a suspended SPS configuration when the frequency band configuration changes.

As an embodiment, the first information block explicitly indicates the operation of enabling the reactivation of the SPS configuration when the frequency band configuration changes.

As an embodiment, the first information block explicitly indicates the operation of enabling the resumption of a suspended SPS configuration when the frequency band configuration changes.

### Embodiment 11

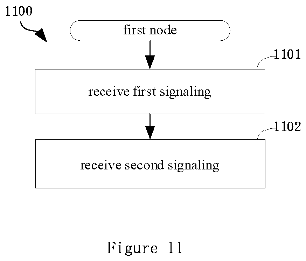

Embodiment 11 illustrates a processing flowchart of a first node according to an embodiment of the present application, as shown in Figure 11.

In Embodiment 11, the first node in the present application receives first signaling in step 1101 and receives second signaling in step 1102.

In Embodiment 11, the first signaling is used to determine a first time-frequency resource set, the first time-frequency resource set is associated with a first CG configuration, and the first time-frequency resource set belongs to frequency domain resources in a first frequency band configuration in the frequency domain; the second signaling is later than the first signaling; the second signaling is used to determine a target frequency band configuration, where the target frequency band configuration is a frequency band configuration after a change in frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of the relationship between the target frequency band configuration and the first frequency band configuration or the first delay.

### Embodiment 12

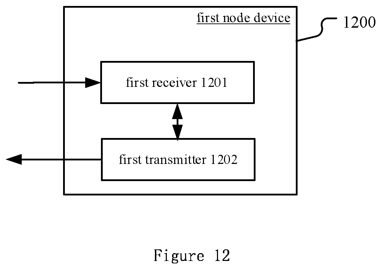

Embodiment 12 illustrates a structural block diagram of a processing apparatus in a first node device, as shown in Figure 12. In Figure 12, the first node device processing apparatus 1200 includes a first receiver 1201 and a first transmitter 1202.

As an embodiment, the first node device 1200 is a base station.

As an embodiment, the first node device 1200 is a user equipment.

As an embodiment, the first node device 1200 is a relay node.

As an embodiment, the first node device 1200 is a vehicle-mounted communication device.

As an embodiment, the first node device 1200 is a user equipment supporting V2X communication.

As an embodiment, the first node device 1200 is a relay node supporting V2X communication.

As an embodiment, the first node device 1200 is a user equipment supporting operations on high-frequency spectrum.

As an embodiment, the first node device 1200 is a user equipment supporting operations on shared spectrum.

As an embodiment, the first node device 1200 is a user equipment supporting XR services.

As an embodiment, the first receiver 1201 includes at least one of the antenna 452, receiver 454, multi-antenna receiving processor 458, receiving processor 456, controller/processor 459, memory 460, and data source 467 shown in Figure 4 of the present application.

As an embodiment, the first receiver 1201 includes at least the first five of the antenna 452, receiver 454, multi-antenna receiving processor 458, receiving processor 456, controller/processor 459, memory 460, and data source 467 shown in Figure 4 of the present application.

As an embodiment, the first receiver 1201 includes at least the first four of the antenna 452, receiver 454, multi-antenna receiving processor 458, receiving processor 456, controller/processor 459, memory 460, and data source 467 shown in Figure 4 of the present application.

As an embodiment, the first receiver 1201 includes at least the first three of the antenna 452, receiver 454, multi-antenna receiving processor 458, receiving processor 456, controller/processor 459, memory 460, and data source 467 shown in Figure 4 of the present application.

As an embodiment, the first receiver 1201 includes at least the first two of the antenna 452, receiver 454, multi-antenna receiving processor 458, receiving processor 456, controller/processor 459, memory 460, and data source 467 shown in Figure 4 of the present application.

As an embodiment, the first transmitter 1202 includes at least one of the antenna 452, transmitter 454, multi-antenna transmitting processor 457, transmitting processor 468, controller/processor 459, memory 460, and data source 467 shown in Figure 4 of the present application.

As an embodiment, the first transmitter 1202 includes at least the first five of the antenna 452, transmitter 454, multi-antenna transmitting processor 457, transmitting processor 468, controller/processor 459, memory 460, and data source 467 shown in Figure 4 of the present application.

As an embodiment, the first transmitter 1202 includes at least the first four of the antenna 452, transmitter 454, multi-antenna transmitting processor 457, transmitting processor 468, controller/processor 459, memory 460, and data source 467 shown in Figure 4 of the present application.

As an embodiment, the first transmitter 1202 includes at least the first three of the antenna 452, transmitter 454, multi-antenna transmitting processor 457, transmitting processor 468, controller/processor 459, memory 460, and data source 467 shown in Figure 4 of the present application.

As an embodiment, the first transmitter 1202 includes at least the first two of the antenna 452, transmitter 454, multi-antenna transmitting processor 457, transmitting processor 468, controller/processor 459, memory 460, and data source 467 shown in Figure 4 of the present application.

As an embodiment, the first receiver 1201 receives first signaling, where the first signaling is used to determine a first time-frequency resource set, the first time-frequency resource set is associated with a first SPS configuration, and the first time-frequency resource set belongs to frequency domain resources in a first frequency band configuration in the frequency domain; the first receiver 1201 receives second signaling, where the second signaling is later than the first signaling; wherein the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether to receive the PDSCH for the first SPS configuration in the first time-frequency resource set is related to at least one of the relationship between the target frequency band configuration and the first frequency band configuration or the first delay.

As an embodiment, when a first condition set is satisfied, the PDSCH for the first SPS configuration is received in the first time-frequency resource set; the first condition set includes a first condition, and the first condition is related to the relationship between the target frequency band configuration and the first frequency band configuration.

As an embodiment, the first condition is: the target frequency band configuration is the first frequency band configuration; or, the first condition is: the first time-frequency resource set belongs to the intersection of frequency domain resources in the target frequency band configuration and frequency domain resources in the first frequency band configuration in the frequency domain.

As an embodiment, the first condition set includes a second condition, the second condition is related to the relationship between the first delay and a first reference delay, and the first reference delay is not less than the delay required to complete the change to the target frequency band configuration or is associated with the second signaling.

As an embodiment, the first frequency band configuration is a BWP, and the target frequency band configuration is the first frequency band configuration or a BWP other than the first frequency band configuration.

As an embodiment, a first frequency band configuration set includes multiple frequency band configurations, all of the multiple frequency band configurations in the first frequency band configuration set are associated with the same BWP, the first frequency band configuration belongs to the multiple frequency band configurations in the first frequency band configuration set; the target frequency band configuration is one of the multiple frequency band configurations in the first frequency band configuration set.

As an embodiment, the first receiver 1201 receives a first information block, or the first transmitter 1202 sends a first information block.

As an embodiment, the first receiver 1201 receives first signaling, where the first signaling is used to determine a first time-frequency resource set, the first time-frequency resource set is associated with a first CG configuration, and the first time-frequency resource set belongs to frequency domain resources in a first frequency band configuration in the frequency domain; the first receiver 1201 receives second signaling, where the second signaling is later than the first signaling; wherein the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of the relationship between the target frequency band configuration and the first frequency band configuration or the first delay.

As an embodiment, when a first condition set is satisfied, there is an uplink grant for the first CG configuration in the first time-frequency resource set; the first condition set includes a first condition, and the first condition is related to the relationship between the target frequency band configuration and the first frequency band configuration.

As an embodiment, the first condition is: the target frequency band configuration is the first frequency band configuration; or, the first condition is: the first time-frequency resource set belongs to the intersection of frequency domain resources in the target frequency band configuration and frequency domain resources in the first frequency band configuration in the frequency domain.

As an embodiment, the first condition set includes a second condition, the second condition is related to the relationship between the first delay and a first reference delay, and the first reference delay is not less than the delay required to complete the change to the target frequency band configuration.

As an embodiment, the first frequency band configuration is a BWP, and the target frequency band configuration is the first frequency band configuration or a BWP other than the first frequency band configuration.

As an embodiment, a first frequency band configuration set includes multiple frequency band configurations, all of the multiple frequency band configurations in the first frequency band configuration set are associated with the same BWP, the first frequency band configuration belongs to the multiple frequency band configurations in the first frequency band configuration set; the target frequency band configuration is one of the multiple frequency band configurations in the first frequency band configuration set.

As an embodiment, the first receiver 1201 receives a first information block, or the first transmitter 1202 sends a first information block.

As an embodiment, the first CG configuration corresponds to a Type 2 CG.

As an embodiment, the first signaling is used to activate the first CG configuration.

### Embodiment 13

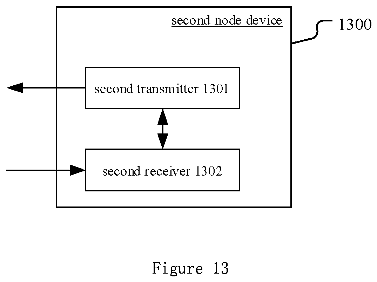

Embodiment 13 illustrates a structural block diagram of a processing apparatus in a second node device, as shown in Figure 13. In Figure 13, the second node device processing apparatus 1300 includes a second transmitter 1301 and a second receiver 1302.

As an embodiment, the second node device 1300 is a user equipment.

As an embodiment, the second node device 1300 is a base station.

As an embodiment, the second node device 1300 is a satellite device.

As an embodiment, the second node device 1300 is a relay node.

As an embodiment, the second node device 1300 is a vehicle-mounted communication device.

As an embodiment, the second node device 1300 is a user equipment supporting V2X communication.

As an embodiment, the second node device 1300 is a device supporting operations on high-frequency spectrum.

As an embodiment, the second node device 1300 is a device supporting operations on shared spectrum.

As an embodiment, the second node device 1300 is a device supporting XR services.

As an embodiment, the second node device 1300 is one of a test apparatus, testing equipment, or test instrument.

As an embodiment, the second transmitter 1301 includes at least one of the antenna 420, transmitter 418, multi-antenna transmitting processor 471, transmitting processor 416, controller/processor 475, and memory 476 shown in Figure 4 of the present application.

As an embodiment, the second transmitter 1301 includes at least the first five of the antenna 420, transmitter 418, multi-antenna transmitting processor 471, transmitting processor 416, controller/processor 475, and memory 476 shown in Figure 4 of the present application.

As an embodiment, the second transmitter 1301 includes at least the first four of the antenna 420, transmitter 418, multi-antenna transmitting processor 471, transmitting processor 416, controller/processor 475, and memory 476 shown in Figure 4 of the present application.

As an embodiment, the second transmitter 1301 includes at least the first three of the antenna 420, transmitter 418, multi-antenna transmitting processor 471, transmitting processor 416, controller/processor 475, and memory 476 shown in Figure 4 of the present application.

As an embodiment, the second transmitter 1301 includes at least the first two of the antenna 420, transmitter 418, multi-antenna transmitting processor 471, transmitting processor 416, controller/processor 475, and memory 476 shown in Figure 4 of the present application.

As an embodiment, the second receiver 1302 includes at least one of the antenna 420, receiver 418, multi-antenna receiving processor 472, receiving processor 470, controller/processor 475, and memory 476 shown in Figure 4 of the present application.

As an embodiment, the second receiver 1302 includes at least the first five of the antenna 420, receiver 418, multi-antenna receiving processor 472, receiving processor 470, controller/processor 475, and memory 476 shown in Figure 4 of the present application.

As an embodiment, the second receiver 1302 includes at least the first four of the antenna 420, receiver 418, multi-antenna receiving processor 472, receiving processor 470, controller/processor 475, and memory 476 shown in Figure 4 of the present application.

As an embodiment, the second receiver 1302 includes at least the first three of the antenna 420, receiver 418, multi-antenna receiving processor 472, receiving processor 470, controller/processor 475, and memory 476 shown in Figure 4 of the present application.

As an embodiment, the second receiver 1302 includes at least the first two of the antenna 420, receiver 418, multi-antenna receiving processor 472, receiving processor 470, controller/processor 475, and memory 476 shown in FIG. 4 of the present application.

As an embodiment, the second transmitter 1301 sends first signaling, where the first signaling is used to determine a first time-frequency resource set, the first time-frequency resource set is associated with a first SPS configuration, and the first time-frequency resource set belongs to frequency domain resources in a first frequency band configuration in the frequency domain; the second transmitter 1301 sends second signaling, where the second signaling is later than the first signaling; wherein the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether the receiver of the first signaling receives the PDSCH for the first SPS configuration in the first time-frequency resource set is related to at least one of the relationship between the target frequency band configuration and the first frequency band configuration or the first delay.

As an embodiment, when a first condition set is satisfied, the receiver of the first signaling receives the PDSCH for the first SPS configuration in the first time-frequency resource set; the first condition set includes a first condition, and the first condition is related to the relationship between the target frequency band configuration and the first frequency band configuration.

As an embodiment, the first condition is: the target frequency band configuration is the first frequency band configuration; or, the first condition is: the first time-frequency resource set belongs to the intersection of frequency domain resources in the target frequency band configuration and frequency domain resources in the first frequency band configuration in the frequency domain.

As an embodiment, the first condition set includes a second condition, the second condition is related to the relationship between the first delay and a first reference delay, and the first reference delay is not less than the delay required to complete the change to the target frequency band configuration or is associated with the second signaling.

As an embodiment, the first frequency band configuration is a BWP, and the target frequency band configuration is the first frequency band configuration or a BWP other than the first frequency band configuration.

As an embodiment, a first frequency band configuration set includes multiple frequency band configurations, all of the multiple frequency band configurations in the first frequency band configuration set are associated with the same BWP, the first frequency band configuration belongs to the multiple frequency band configurations in the first frequency band configuration set; the target frequency band configuration is one of the multiple frequency band configurations in the first frequency band configuration set.

As an embodiment, the second transmitter 1301 sends a first information block, or the second receiver 1302 receives a first information block.

As an embodiment, the second transmitter 1301 sends first signaling, where the first signaling is used to determine a first time-frequency resource set, the first time-frequency resource set is associated with a first CG configuration, and the first time-frequency resource set belongs to frequency domain resources in a first frequency band configuration in the frequency domain; the second transmitter 1301 sends second signaling, where the second signaling is later than the first signaling; wherein the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether there is an uplink grant for the first CG configuration in the first time-frequency resource set is related to at least one of the relationship between the target frequency band configuration and the first frequency band configuration or the first delay.

As an embodiment, when a first condition set is satisfied, there is an uplink grant for the first CG configuration in the first time-frequency resource set; the first condition set includes a first condition, and the first condition is related to the relationship between the target frequency band configuration and the first frequency band configuration.

As an embodiment, the first condition is: the target frequency band configuration is the first frequency band configuration; or, the first condition is: the first time-frequency resource set belongs to the intersection of frequency domain resources in the target frequency band configuration and frequency domain resources in the first frequency band configuration in the frequency domain.

As an embodiment, the first condition set includes a second condition, the second condition is related to the relationship between the first delay and a first reference delay, and the first reference delay is not less than the delay required to complete the change to the target frequency band configuration.

As an embodiment, the first frequency band configuration is a BWP, and the target frequency band configuration is the first frequency band configuration or a BWP other than the first frequency band configuration.

As an embodiment, a first frequency band configuration set includes multiple frequency band configurations, all of the multiple frequency band configurations in the first frequency band configuration set are associated with the same BWP, the first frequency band configuration belongs to the multiple frequency band configurations in the first frequency band configuration set; the target frequency band configuration is one of the multiple frequency band configurations in the first frequency band configuration set.

As an embodiment, the second transmitter 1301 sends a first information block, or the second receiver 1302 receives a first information block.

As an embodiment, the first CG configuration corresponds to a Type 2 CG.

As an embodiment, the first signaling is used to activate the first CG configuration.

Those skilled in the art can understand that all or part of the steps in the above method can be completed by instructing related hardware through a program, and the program can be stored in a computer-readable storage medium, such as a read-only memory, hard disk, or optical disk. Optionally, all or part of the steps in the above embodiments can also be implemented using one or more integrated circuits. Accordingly, each module unit in the above embodiments can be implemented in the form of hardware or in the form of software functional modules. The present application is not limited to any specific combination of software and hardware. The first node device in the present application includes, but is not limited to, wireless communication devices such as mobile phones, tablet computers, laptops, network cards, low-power devices, eMTC devices, NB-IoT devices, vehicle-mounted communication devices, aircraft, airplanes, drones, and remote-controlled aircraft. The second node device in the present application includes, but is not limited to, wireless communication devices such as mobile phones, tablet computers, laptops, network cards, low-power devices, eMTC devices, NB-IoT devices, vehicle-mounted communication devices, aircraft, airplanes, drones, and remote-controlled aircraft. The user equipment, UE, or terminal in the present application includes, but is not limited to, wireless communication devices such as mobile phones, tablet computers, laptops, network cards, low-power devices, eMTC devices, NB-IoT devices, vehicle-mounted communication devices, aircraft, airplanes, drones, and remote-controlled aircraft. The base station device, base station, or network-side device in the present application includes, but is not limited to, devices such as macro cellular base stations, micro cellular base stations, home base stations, relay base stations, eNB, gNB, transmission reception point TRP, GNSS, relay satellites, satellite base stations, aerial base stations, test apparatuses, testing equipment, and test instruments.

Those skilled in the art should understand that the present invention can be implemented in other specified forms without departing from its core or essential characteristics. Therefore, the embodiments disclosed herein should be considered descriptive rather than restrictive in all respects. The scope of the invention is determined by the appended claims rather than the foregoing description, and all changes within the equivalent meaning and scope thereof are deemed to be included therein.

## Claims

1. A first node used for wireless communication, **characterized in that** it comprises:
a first receiver that receives first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
the first receiver receives second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether a PDSCH for the first SPS configuration is received in the first time-frequency resource set is related to at least one of: the relationship between the target frequency band configuration and the first frequency band configuration, or the first delay.

2. The first node according to Claim 1, **characterized in that**, when a first condition set is satisfied, the PDSCH for the first SPS configuration is received in the first time-frequency resource set; the first condition set includes a first condition, and the first condition is related to the relationship between the target frequency band configuration and the first frequency band configuration.

3. The first node according to Claim 2, **characterized in that** the first condition is: the target frequency band configuration is the first frequency band configuration; or, the first condition is: the first time-frequency resource set belongs to the intersection of frequency domain resources in the target frequency band configuration and frequency domain resources in the first frequency band configuration in the frequency domain.

4. The first node according to Claim 2 or 3, **characterized in that** the first condition set includes a second condition, the second condition being related to the relationship between the first delay and a first reference delay, wherein the first reference delay is not less than the delay required to complete the change to the target frequency band configuration or is associated with the second signaling.

5. The first node according to any one of Claims 1 to 4, **characterized in that** the first frequency band configuration is a BWP, and the target frequency band configuration is the first frequency band configuration or a BWP other than the first frequency band configuration.

6. The first node according to any one of Claims 1 to 4, **characterized in that** a first frequency band configuration set includes multiple frequency band configurations, all of the multiple frequency band configurations in the first frequency band configuration set are associated with the same BWP, and the first frequency band configuration belongs to the multiple frequency band configurations in the first frequency band configuration set; the target frequency band configuration is one of the multiple frequency band configurations in the first frequency band configuration set.

7. The first node according to any one of Claims 1 to 6, **characterized in that** it comprises:
the first receiver receives a first information block, or a first transmitter sends a first information block;
wherein, the first information block is used to determine whether receiving the PDSCH for the first SPS configuration in the first time-frequency resource set is related to at least one of: the relationship between the target frequency band configuration and the first frequency band configuration, or the first delay.

8. A second node used for wireless communication, **characterized in that** it comprises:
a second transmitter that sends first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
the second transmitter sends second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether the recipient of the first signaling receives a PDSCH for the first SPS configuration in the first time-frequency resource set is related to at least one of: the relationship between the target frequency band configuration and the first frequency band configuration, or the first delay.

9. A method used in a first node for wireless communication, **characterized in that** it comprises:
receiving first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
receiving second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether a PDSCH for the first SPS configuration is received in the first time-frequency resource set is related to at least one of: the relationship between the target frequency band configuration and the first frequency band configuration, or the first delay.

10. A method used in a second node for wireless communication, **characterized in that** it comprises:
transmitting first signaling, wherein the first signaling is used to determine a first time-frequency resource set, the first time-frequency resource set is associated with a first SPS configuration, and the first time-frequency resource set belongs to frequency domain resources in a first frequency band configuration in the frequency domain;
transmitting second signaling, wherein the second signaling is later than the first signaling;
wherein, the second signaling is used to determine a target frequency band configuration, the target frequency band configuration being a frequency band configuration after a change in frequency band configuration; the first time-frequency resource set is later than the second signaling in the time domain, and a first delay is equal to the time domain delay between the second signaling and the first time-frequency resource set; whether the recipient of the first signaling receives a PDSCH for the first SPS configuration in the first time-frequency resource set is related to at least one of: the relationship between the target frequency band configuration and the first frequency band configuration, or the first delay.
